# EUROPEAN PATENT SPECIFICATION

(11) **EP 0 888 880 B1**
(45) Date of publication and mention of the grant of the patent: **02.08.2006**
(21) Application number: 97947961.5
(22) Date of filing: 16.12.1997
(51) Int. Cl.: B32B 27/00, C08K 3/04, C08L 81/04, F16L 11/118

(54) **CONDUCTIVE MULTILAYER BLOW MOLDING AND CONDUCTIVE RESIN COMPOSITION**
LEITFAHIGE KUNSTSTOFFZUSAMMENSETZUNG UND LEITFAHIGES, MEHRSCHICHTIGES BLASFORMTEIL
PIECE SOUFFLEE MULTICOUCHE CONDUCTRICE ET COMPOSITION DE RESINE CONDUCTRICE

(30) Priority: 16.12.1996 JP 33587796; 26.02.1997 JP 4276497; 06.03.1997 JP 5150597
(43) Date of publication of application: 07.01.1999
(73) Proprietor: TORAY INDUSTRIES, INC., Tokyo 103 (JP)
(72) Inventor: ISHIO, Atsushi, Nagoa-shi, Aichi 457 (JP); SHIMASAKI, Norio, Nagoya-shi, Aichi 454 (JP); TATEYAMA, Masaru, Mizuho-ku, Nagoya-shi, Aichi 467 (JP); KOBAYASHI, Kazuhiko, Tokoname-shi, Aichi 479 (JP)
(74) Representative: Coleiro, Raymond
(86) International application number: PCT/JP1997/004634
(87) International publication number: WO 1998/026922

(56) References cited:
- EP-A- 0 435 044
- EP-A- 0 551 094
- EP-A- 0 702 182
- JP-A- 4 248 089
- JP-A- 5 062 517
- JP-A- 5 124 090
- JP-A- 6 001 916
- JP-A- 6 179 791
- JP-A- 6 190 978
- JP-A- 6 190 979
- JP-A- 7 299 855
- JP-A- 7 316 428
- JP-A- 8 134 353
- JP-A- 8 151 518
- JP-B- 63 026 781

## Description

### TECHNICAL FIELD

The present invention relates to electroconductive, multilayered hollow moldings with good and well-balanced heat resistance, hot water resistance, chemical resistance, gasohol permeation resistance, outward appearance, interlayer adhesion and low-temperature stiffness, and also to electroconductive resin compositions suitable for such multilayered hollow moldings.

### BACKGROUND ART

For producing hollow moldings of thermoplastic resins, widely known are various techniques. For example, known are a technique of blow molding of polyamide resins to produce ducts to be in the engine room of cars, and a technique of extrusion molding of saturated polyester resins, polyamide resins, polyolefin resins and thermoplastic polyurethanes to give tubes.

However, since conventional, single-layered hollow moldings of polyamide resins, saturated polyester resins, polyolefin resins or thermoplastic resins such as polyurethane resins have poor heat resistance, hot water resistance and chemical resistance, their applications are limited. Therefore, products with improved heat resistance, hot water resistance and chemical resistance are desired.

For fuel tubes for cars, generally used are polyamide resins, in particular, soft polyamide resins such as polyamide 11 and polyamide 12. However, it is said that tubes made from only such polyamide resins do not have good alcohol-gasoline permeation resistance, which is required for preventing environmental pollution and for lowering fuel expenses, and some improvements in those tubes are required.

Where hollow blow moldings or tube moldings are used as tubes and where non-conductive liquids such as fuel are run therein, those moldings are often charged. In those cases, therefore, it is desired to prevent the moldings from being charged.

On the other hand, polyphenylene sulfide resins (hereinafter referred to as PPS resins) are engineering plastics with good heat resistance, hot water resistance, chemical resistance and flame resistance, while having good electric characteristics, and there is increasing a great demand for the applications of those PPS resins to electric and electronic parts and also to car parts. Recently, JP-B-02-200415 has disclosed tubular moldings comprising PPS resins, referring to the characteristics of the resins.

Hollow moldings of such PPS resins could solve the problems in poor heat resistance, hot water resistance, chemical resistance and gas permeation resistance such as those mentioned above, but are often still unsatisfactory in stiffness, especially low-temperature stiffness that is often required for use in cars. Therefore, the applications of those hollow moldings are limited.

JP-A-07-299855 and EP-A-0679825 disclose multilayered tubes comprising a PPS layer, in which is referred to a method for improving the interlayer adhesion of those multilayered tubes by activating the surface of the PPS layer through corona processing. However, secondary processing such as corona processing is disadvantageous in view of its cost, and is therefore unfavorable. In addition, nothing is referred to in the laid-open specification with respect to the stiffness of the multilayered tubes.

On the other hand, various studies have heretofore been made for making PPS resins electroconductive. For example, JP-A-60-53560 discloses electroconductive PPS resin compositions comprising PPS resin and electroconductive carbon black; and JP-A-01-272665 discloses electroconductive PPS mixtures comprising PPS resin, electroconductive carbon black, and graphite. However, no disclosure is given in any of those laid-open specifications with respect to hollow moldings of electroconductive PPS resins, and, in addition, nothing is referred to therein with respect to any specific resin characteristics and any specific resin compositions that may target the improvements in the blow moldability and the tube moldability of the resin compositions and in the interlayer adhesion of the moldings of the resin compositions. Needless-to-say, no disclosure is given in those laid-open specifications with respect to multilayered hollow moldings to be prepared by laminating electroconductive PPS resin layers.

It is known to incorporate an electroconductive filler into thermoplastic resins, for example, as in JP-A-54-113640. However, our studies have revealed that such known resin compositions could be molded in injection molding or the like in which the moldings being produced are pressed against molds under high pressure, but bring about some problems when applied to hollow molding such as blow molding or tube molding, in which any high pressure is not applied to the surface of the molding being produced. Specifically, when the known resin compositions are applied to such hollow molding, the surfaces of the resulting moldings are often roughened so that the moldings could not have good surface smoothness. In addition, the extrusion molding conditions for the known resin compositions are narrowly limited, and even the extrusion molding devices applicable to them are also limited. For these reasons, we have found that the known resin compositions could not be simply applied to such hollow molding. Moreover, we have further found that the surface roughness of the moldings have some negative influences on the strength of the moldings.

EP-A-0551 094 proposes multi-layer tubes having an inner layer of a conductive fluoropolymer and an outer layer of thermoplastic polymer. We have further studied in order to solve the problems with those conventional, multilayered hollow moldings, and, as a result, have achieved the present invention. Specifically, the invention is to provide electroconductive, multilayered hollow moldings with good and well-balanced heat resistance, hot water resistance, chemical resistance, alcohol-gasoline permeation resistance, stiffness, low-temperature stiffness, surface smoothness and interlayer adhesion.

Accordingly, the present invention provides the following moldings:

An electroconductive, multilayered hollow molding comprising at least three or more thermoplastic resin layers, in which at least one layer is an interlayer a layer (a) of a polyphenylene sulfide resin composition which comprises (A) 100 parts by weight of a polyphenylene sulfide resin and (B) from 1 to 200 parts by weight of an olefinic copolymer containing at least one functional group selected from epoxy groups, acid anhydride groups, carboxy group and its salts and carboxylate groups, at least one layer is an outer layer (b) of a thermoplastic resin except polyphenylene sulfide resins or a thermoplastic resin composition consisting essentially of a thermoplastic resin except polyphenylene sulfide resins, and at least one layer is an inner layer (c) of an electroconductive, thermoplastic resin composition indispensably comprising an electroconductive filler and/or an electroconductive polymer.

A second aspect of the invention concerns the use, of an electroconductive multilayered hollow molding according to the first aspect, as a fuel tube.

Embodiments of the invention provide an electroconductive, multilayered hollow molding as claimed in the accompanying claim 1, which is composed of three layers, an interlayer (a) of a polyphenylene sulfide resin composition, an outermost layer (b) of a thermoplastic resin except polyphenylene sulfide resins or a thermoplastic resin composition consisting essentially of a thermoplastic resin except polyphenylene sulfide resins, and an innermost layer (c) of an electroconductive, thermoplastic resin composition indispensably comprising an electroconductive filler and/or an electroconductive polymer.

In the present electroconductive, multilayered hollow molding the thermoplastic resin except polyphenylene sulfide resins that constitutes the layer (b) may be at least one selected from polyamide resins, thermoplastic polyester resins, thermoplastic polyurethane resins and polyolefin resins.

Also, in the present electroconductive, multilayered hollow molding the thermoplastic resin except polyphenylene sulfide resins or the thermoplastic resin composition consisting essentially of a thermoplastic resin except polyphenylene sulfide resins that constitutes the layer (b) may have a Young's modulus of not larger than 18,000 kg/cm².

In embodiment of the electroconductive, multilayered hollow molding of the invention, the resin that constitutes the layer (b) is a polyamide resin comprising constitutional amido units each having from 8 to 15 carbon atoms per one amido group.

Thus, in the electroconductive, multilayered hollow molding as claimed in the accompanying claim 1, the polyphenylene sulfide resin composition that constitutes the layer (a) comprises (A) 100 parts by weight of a polyphenylene sulfide resin and (B) from 1 to 200 parts by weight of an olefinic copolymer containing at least one functional group selected from epoxy groups, acid anhydride groups, carboxyl group and its salts, and carboxylate groups.

In embodiments of the invention the functional group-having olefinic copolymer (B1) to be in the polyphenylene sulfide resin composition that constitutes the layer (a) may be an epoxy group-having olefinic copolymer (B1) consisting essentially of an α-olefin and a glycidyl ester of an α, β-unsaturated acid.

In further embodiments of the electroconductive, multilayered hollow molding, the epoxy group-having olefinic copolymer (B1) to be in the polyphenylene sulfide resin composition that constitutes the layer (a) is an olefinic copolymer (B1) indispensably comprising (1) an α-olefin, (2) a glycidyl ester of an α,β-unsaturated acid, and (3) a monomer to be represented by the following general formula: 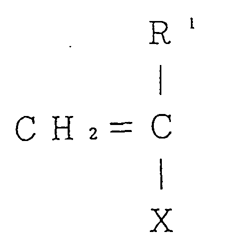 wherein R¹ represents a hydrogen atom or a lower alkyl group; X represents a group selected from - COOR², -CN and aromatic groups; and R² represents an alkyl group having from 1 to 10 carbon atoms.

In still further embodiments the polyphenylene sulfide resin composition that constitutes the layer (a) indispensably comprises at least two, functional group-having olefinic copolymers (B) of (B1) an epoxy group-having olefinic copolymer and (B2) an acid anhydride group-having olefinic copolymer, and in which the ratio in terms of % by weight of (B1) to (B2), (B1)/(B2), falls between 1/99 and 99/1 with the total of (B1) and (B2) being 100 % by weight.

Also, in still further embodiments of the present electroconductive, multilayered hollow molding, the polyphenylene sulfide resin composition that constitutes the layer (a) further contains (C) from 1 to 200 parts by weight, relative to 100 parts by weight of the polyphenylene sulfide resin (A), of an elastomer having none of epoxy groups, acid anhydride groups, carboxyl group and its salts, and carboxylate groups, with the total of the functional group-having olefinic copolymer (B) and the elastomer (C) being not larger than 200 parts by weight relative to 100 parts by weight of the polyphenylene sulfide resin (A). In additional embodiments of the electroconductive, multilayered hollow molding of the invention, the polyphenylene sulfide resin composition that constitutes the layer (a) further contains (D) from 5 to 200 parts by weight, relative to 100 parts by weight of the polyphenylene sulfide resin (A), of a thermoplastic resin consisting essentially of repeating units as bonded together via at least one bonding mode selected from amido bonds, ester bonds and urethane bonds.

In such embodiments, the thermoplastic resin (D) may be a polyamide resin.

Furthermore, also in embodiments of the present electroconductive, multilayed hollow molding, the polyphenylene sulfide resin composition that constitutes the layer (a) further contains (E) from 0.05 to 5 parts by weight, relative to 100 parts by weight of the polyphenylene sulfide resin (A), of an alkoxysilane compound having at least one functional group selected from epoxy groups, amino groups, isocyanato groups, hydroxyl groups, mercapto groups and ureido groups.

In the present electroconductive, multilayered hollow molding the polyphenylene sulfide resin (A) to be in the polyphenylene sulfide resin composition that constitutes the layer (a) may be a de-ionized one.

In embodiments of the electroconductive, multilayered hollow molding the electroconductive, thermoplastic resin composition that constitutes the layer (c) comprises 100 parts by weight of a resin composition comprising (F) from 0 to 98 % by weight of a thermoplastic resin, (B) from 2 to 60 % by weight of an olefinic copolymer having at least one functional group selected from epoxy groups, acid anhydride groups, carboxyl group and its salts, and carboxylate groups, and (C) from 0 to 58 % by weight of an elastomer having none of epoxy groups, acid anhydride groups, carboxyl group and its salts, and carboxylate groups, and (G) from 1 to 100 parts by weight of an electroconductive filler or an electroconductive polymer. According to such embodiments the electroconductive filler or polymer (G) to be in the electroconductive, thermoplastic resin composition that constitutes the layer (c) may be either a non-fibrous one or a fibrous one having a ratio, length/diameter, of not larger than 200.

Also, according to such embodiments the electroconductive filler (G) to be in the electroconductive, thermoplastic resin composition that constitutes the layer (c) may be carbon black.

In further such embodiments the electroconductive filler (G) to be in the electroconductive, thermoplastic resin composition that constitutes the layer (c) is carbon black having a specific surface area (as measured in a BET method) of not smaller than 500 m²/g. The thermoplastic resin (F) to be in the electroconductive, thermoplastic resin composition that constitutes the layer (c) may be at least one selected from polyphenylene sulfides, polyamide resins, and thermoplastic polyester resins.

According to such embodiments of the present electroconductive, multilayered hollow molding the thermoplastic resin (F) to be in the resin composition for the layer (c) is a polyphenylene sulfide resin, and the electroconductive, thermoplastic resin composition that constitutes the layer (c) is a polyphenylene sulfide resin composition indispensably comprising at least two, functional group-having olefinic copolymers (B) of (B1) an epoxy group-having olefinic copolymer and (B2) an acid anhydride group-having olefinic copolymer with the ratio in terms of % by weight of (B1) to (B2), (B1)/(B2), falling between 1/99 and 99/1 and with the total of (B1) and (B2) being 100 % by weight.

In the present electroconductive, multilayered hollow molding the electroconductive, thermoplastic resin composition that constitutes the layer (c) may have a volume resistivity of not larger than 10¹⁰Ωcm, and optionally may have a volume resistivity of larger than 100 Ω cm but not larger than 10¹⁰ Ω cm.

In embodiments of the invention the electroconductive, multilayered hollow molding has a total thickness falling between 0.2 mm and 3 mm and of which the thickness of the electroconductive layer falls between 1 % and 50 % of the total thickness of the molding The present electroconductive multilayered hollow molding may be derived from an electroconductive resin composition, which indispensably comprises (A) a polyphenylene sulfide resin, (G) an electroconductive filler and/or an electroconductive polymer, and (B) an olefinic copolymer having at least one functional group selected from epoxy groups, acid anhydride groups, carboxyl group and its salts, and carboxylate groups, and in which the amount of the functional group-having olefinic copolymer (B) is from 1 to 200 parts by weight relative to 100 parts by weight of the polyphenylene sulfide resin (A).

Such an electroconductive resin composition may further contain (C) from 5 to 200 parts by weight, relative to 100 parts by weight of the polyphenylene sulfide resin (A), of an elastomer having none of epoxy groups, acid anhydride groups, carboxyl group and its salts, and carboxylate groups, with the total of the components (B) and (C) being not larger than 200 parts by weight relative to 100 parts by weight of the polyphenylene sulfide resin (A).

The elastomer (C) may be one or more selected from ethylene-propylene copolymers, ethylene-butene copolymers, and ethylene-propylene-diene copolymers.

The electroconductive resin composition may further contain (D) from 5 to 200 parts by weight, relative to 100 parts by weight of the polyphenylene sulfide resin (A), of a thermoplastic resin consisting essentially of repeating units as bonded together via at least one bonding mode selected from amido bonds, ester bonds and urethane bonds.

The thermoplastic resin (D) may be at least one selected from polyamide resins, saturated polyester resins and thermoplastic polyurethane resins.

Such an electroconductive resin composition may contain as component (G), either a non-fibrous electroconductive filler or a fibrous electroconductive filler having a ratio, length/diameter, of not larger than 200. An example of component (G) is carbon black.

Embodiments of the present electroconductive multilayered hollow molding may be derived from a thermoplastic resin composition, which comprises (F) 100 parts by weight of a thermoplastic resin and (G') from 1 to 100 parts by weight of an electroconductive filler, and which is characterized in that, when it is put into a melt indexer (at a temperature of being higher than its melting point by 60 °C, for a residence time of 5 minutes, and under a load of 5 kg, the melt indexer having an orifice diameter of 0.0825 inches and an orifice length of 0.315 inches) to obtain a gut and when the gut is projected through a projector, the number of projections having a height of not shorter than 25 µm as seen in the surface of the gut is not more than 5 per cm of the gut.

In such a thermoplastic resin composition, the thermoplastic resin (F) may be a polyamide resin. An example polyamide resin comprises constitutional amido units each having from 8 to 15 carbon atoms per one amido group, and also may have a relative viscosity of from 1.5 to 5.0, as measured in metacresol (having a polymer concentration of 0.5 % by weight) at 25°C.

A further example of the polyamide resin is a polycapramide homopolymer or a polycapramide copolymer having capramido units of not smaller than 50 mol%, and has a relative viscosity of from 2.0 to 5.5 as measured in a 98 % concentrated sulfuric acid solution (containing 1 g of the polymer in 100 ml of concentrated sulfuric acid) at 25°C.

The thermoplastic resin composition further contains (B) from 1 to 100 parts by weight, relative to 100 parts by weight of the thermoplastic resin (F), of a thermoplastic resin having at least one functional group selected from epoxy groups, acid anhydride groups, carboxyl group and its salts, and carboxylate groups.

In the thermoplastic resin composition, the electroconductive filler (G') may be a powdery, granular, tubular or flaky one, or a fibrous one having a ratio, length/diameter, of not larger than 200. An example of the electroconductive filler (G') is carbon powder. The carbon powder may have a specific surface area of from 500 to 1500 m²/g, as obtained in a BET method. Also, the carbon powder may have a DBP absorption of not smaller than 370 ml/100 g.

The thermoplastic resin composition may have a volume resistivity of not larger than 10¹⁰ Ω cm, and furthermore may have a melt viscosity of from 100 to 20,000 poises, as measured at 270°C and at a shear rate of 1,000/sec.

An electroconductive, multilayered hollow molding as claimed in the accompanying claim 1 may be derived from a thermoplastic resin composition which comprises (F) a thermoplastic resin, (G') an electroconductive filler, and (B) an olefinic copolymer having at least one functional group se 1 ected from epoxy groups, acid anhydride groups, carboxyl group and its salts, and carboxylate groups, and which is prepared by melt-kneading the thermoplastic resin (F) and the electroconductive filler (G') followed by further melt-kneading the resulting mixture with the functional group-having olefinic copolymer (B).

The thermoplastic resin composition may be prepared through melt-kneading of the components, and in which the thermoplastic resin (F) is, before being melt-kneaded, granular or powdery and has a weight-average grain size of not larger than 2 mm.

### BEST MODES OF CARRYING OUT THE INVENTION

The electroconductive, multilayered hollow molding of the invention basically comprises at least three or more thermoplastic resin layers, in which at least one layer is an interlayer layer (a) of a polyphenylene sulfide resin composition which comprises (A) 100 parts by weight of a polyphenylene sulfide resin and (B) from 1 to 200 parts by weight of an olefin copolymer containing at least one functional group selected from epoxy groups, acid anhydride groups, carboxy group and its salts, and carboxylate groups and at least one layer is layer (b) of a thermoplastic resin except polyphenylene sulfide resins or a thermoplastic resin composition consisting essentially of a thermoplastic resin except polyphenylene sulfide resins, and at least one layer is an inner layer (c) of an electroconductive thermoplastic resin composition indispensably comprising an electroconductive filler and/or an electroconductive polymer.

First described hereinunder are the thermoplastic resin except polyphenylene sulfide resins and the thermoplastic resin composition consisting essentially of a thermoplastic resin except polyphenylene sulfide resins, which can constitute the layer (b).

The thermoplastic resin except polyphenylene sulfide resins that constitutes the layer (b) is not specifically defined, and may include, for example, saturated polyester resins, polysulfone resins, polyethylene tetrafluoride resins, polyether-imide resins, polyamidimide resins, polyamide resins, polyimide resins, polycarbonate resins, polyether-sulfone resins, polyether-ketone resins, polythioether-ketone resins, polyether-ether-ketone resins, thermoplastic polyurethane resins, polyolefin resins, ABS resins, polyamide elastomers, polyester elastomers, etc. These can be used as mixtures of two or more. Of those, preferred are polyamide resins, thermoplastic polyester resins, thermoplastic polyurethane resins, and polyolefin resins.

The polyamid resins consist essentially of amino acids, lactams or diamines, and dicarboxylic acids. As examples of the essential constituent components, mentioned are amino acids such as 6-aminocaproic acid, 11-aminoundecanoic acid, 12-aminododecanoic acid, ε-ethylbenzoic acid; lactams such as ε-caprolactam, ω-laurolactam; aliphatic, alicyclic and aromatic diamines such as tetramethylene-diamine, hexamethylene-diamine, undecamethylene-diamine, dodecamethylene-diamine, 2,2,4-/2,4,4-trimethylhexamethylene-diamine, 5-methyl-nonamethylene-diamine, metaxylylene-diamine, paraxylylene-diamine, 1,3-bis(arninomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine, aminoethylpiperazine, 2-methylpentamethylene-diamine; and aliphatic, alicyclic and aromatic dicarboxylic acids such as adipic acid, suberic acid, azelaic acid, sebacic acid, dodecane-diacid, terephthalic acid, isophthalic acid, 2-chloroterephthalic acid, 2-methylterephthalic acid, 5-m ethylisophthalic acid, 5-sodium-sulfoisophthalic acid, hexahydroterephthalic acid, hexahydroisophthalic acid. Polyamide homopolymers and copolymers to be derived from those starting compounds are used in the invention either singly or as combined.

The polyamide resins usable in the invention include, for example, polycapramide (nylon 6), polyhexamethylene-a dipamide (nylon 66), polytetramethylene-adipamide (nylon 46), polyhexamethylene-sebacamide (nylon 610), polyhexamethylene-dodecamide (nylon 612), polydodecanamide (nylon 12), polyundecanamide (nylon 11), polyhexamethylene-terephthalamide (nylon 6T), polyxylylene-adipamide (nylon XD6), and their mixtures and copolymers.

Of the polyamide resins, preferred are those comprising constitutional amido units each having from 8 to 15 carbon atoms per one amido group. More preferred are those derived from monomers of aminocarboxylic acids or their derivatives, as producing moldings with better low-temperature stiffness. As examples of such preferred polyamide resins, mentioned are polydodecanamide (nylon 12), nylon 610, nylon 6T/12 copolymer and polyundecanamide (nylon 11).

The degree of polymerization of those polyamide resins is not specifically defined, and may be from 1.5 to 7.0, preferably from 2.0 to 6.5, more preferably from 2.5 to 5.5, in terms of the relative viscosity thereof as measured in a 98 % concentrated sulfuric acid solution (containing 1 g of the polymer in 100 ml of concentrated sulfuric acid) at 25 °C, or may be from 1.0 to 7.0, preferably from 1.5 to 5.0, in terms of the relative viscosity thereof as measured in metacresol (having a polymer concentration of 0.5 % by weight) at 25°C.

The thermoplastic polyester resins usable in the invention are those to be obtained from dicarboxylic acids, such as terephthalic, acid and aliphatic diols. In addition to terephthalic acid, the dicarboxylic acids include, for example, aliphatic dicarboxylic acids having from 2 to 20 carbon atoms, such as azelaic acid, sebacic acid, adipic acid, dodecane-dicarboxylic acid; aromatic dicarboxylic acids such as isophthalic acid, naphthalene-dicarboxylic acid; and alicyclic dicarboxylic acids such as cyclohexanedicarboxylic acid. These can be used either singly or as combined. The aliphatic diols include, for example, ethylene glycol, propylene glycol, 1,4-butane-diol, trimethylene glycol, 1,4-cyclohexane-dimethanol, and hexamethylene glycol.

Preferred examples of the thermoplastic polyesters for use in the invention are polyethylene terephthalate, polypropylene terephthalate, polybutylene terephthalate, polyhexamethylene terephthalate, polycyclohexylene-dimethylene terephthalate, and polyethylene naphthalenedicarboxylate. Of those, especially preferred are polybutylene terephthalate, and copolyesters comprising a dicarboxylic acid component that is comprised of terephthalic acid in an amount of 60 mol% or more, preferably 70 mol% or more, and dodecane-dicarboxylic acid and/or isophthalic acid, and a diol component of 1,4-butane-diol, as they have good mechanical strength.

The degree of polymerization of those thermoplastic polyester resins is not specifically defined. For example, for polybutylene terephthalate (hereinafter referred to as PBT resin) and copolyesters which are preferably used in the invention, it is preferred that they have a degree of polymerization of from 0.5 to 2.5, more preferably from 0.8 to 2.0, in terms of the relative viscosity thereof as measured in a 0.5 % orthochlorophenol solution at 25°C. For polyethylene terephthalate, it is preferred that the polymer has a degree of polymerization of from 0.54 to 1.5, more preferably from 0.6 to 1.2, in terms of its limiting viscosity as measured in a 0.5 % orthochlorophenol solution at 25°C.

The thermoplastic polyurethane resins usable in the invention are linear polymers comprising polyisocyanates and diols. As examples of the polyisocyanates, mentioned are 2,4-tolylene diisocyanate, hexamethylene diisocyanate, metaxylene diisocyanate, and 4,4'-diphenylmethane diisocyanate. The diols include polyester-type ones and polyether-type ones. Examples of the former are polyesterdiols to be produced from organic acids, such as phthalic acid, adipic acid, linoleic acid dimer, maleic acid, and glycols such as ethylene glycol, propylene glycol, butylene glycol, diethylene glycol; and those of the latter are polyoxypropylene glycol, poly(oxypropylene)-poly(oxymethylene) glycol, poly(oxybutylene) glycol, and poly(oxytetramethylene)glycol.

The degree of polymerization of those thermoplastic polyurethanes is not specifically defined, but, in general, may be from 1,000 to 100,000 poises, in terms of the melt viscosity as measured at 220 °C and at a shear rate of 10/sec.

The polyolefin resins usable in the invention include, for example, polyethylene, polypropylene, polyethylene chloride, polypropylene chloride, and polymethylpentene.

The thermoplastic resin composition which consists essentially of a thermoplastic resin except polyphenylene sulfide resins, such as that mentioned hereinabove, and which constitutes the layer (b) may contain additives such as plasticizer and others that are suitable for the resin.

Preferably, the thermoplastic resin except polyphenylene sulfide resins and the thermoplastic resin composition that are to constitute the layer (b) have a Young's modulus of not larger than 18,000 kg/cm², more preferably not larger than 15,000 kg/cm², in view of the kink resistance of the tubular moldings of the invention.

The thermoplastic resin composition consisting essentially of a thermoplastic resin except polyphenylene sulfide resins, which is used to form the layer (b), is meant to indicate that the weight proportion of the thermoplastic resin except polyphenylene sulfide resins is the largest among other resin components except low-molecular additives such as plasticizer in the composition.

Now described in detail hereinunder is the polyphenylene sulfide resin (PPS resin) composition that constitutes the layer (a).

The PPS resin to be in the composition is a polymer comprising repeating units of the following structural formula in an amount of preferably 70 mol% or more, more preferably 90 mol% or more of all repeating units.

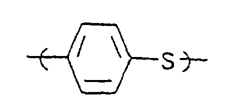

Polymers comprising the repeating units in an amount of smaller than 70 mol% are unfavorable, as having poor heat resistance. The PPS resin may comprise repeating units of any of the following structural formulae in an amount of smaller than 30 mol% of all repeating units.

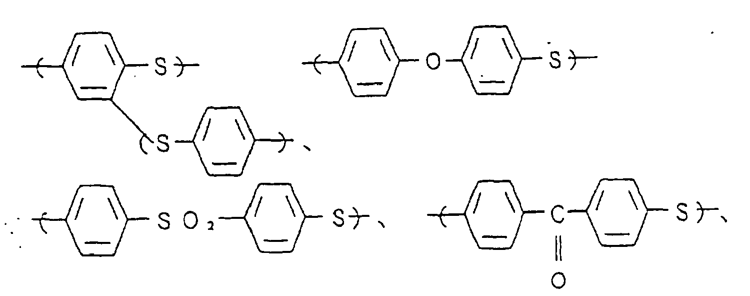

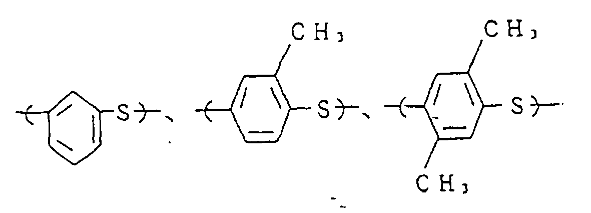

The melt viscosity of the PPS resin for use in the invention is not specifically defined, so far as the resin is melt-kneadable. In general, however, the PPS resin shall have a melt viscosity of from 50 to 20,000 poises, preferably from 100 to 5,000 poises, as measured at 320°C and at a shear rate of 1,000 sec⁻¹.

PPS resins usable in the invention can be produced in any ordinary known manners, for example, by the method of producing polymers having a relatively low molecular weight, as described in JP-B-45-3368, or by the method of producing polymers having a relatively high molecular weight, as described in JP-B-52-12240 or JP-B-61-7332. Needless-to-say, those PPS resins as produced in any of those manners can be processed in various manners, prior to being used in the invention, for example, by heating them in air for crosslinking them and/or increasing their molecular weight, or heating them in an inert gas atmosphere such as nitrogen or under reduced pressure, or washing them with organic solvents, hot water or acidic aqueous solutions, or activating them with functional group-having compounds such as acid anhydrides, amines, isocyanates, functional group-having disulfides.

One example of heating PPS resins for crosslinking them and/or increasing their molecular weight comprises heating a PPS resin in an oxidizing gas atmosphere such as air or oxygen, or in a mixed gas atmosphere comprising the oxidizing gas and an inert gas as nitrogen or argon, in a heating chamber at a predetermined temperature until the resulting PPS resin may have the intended melt viscosity. The heating temperature generally falls between 170 and 280 °C. preferably between 200 and 270 °C, and the heating time generally falls between 0.5 and 100 hours, preferably between 2 and 50 hours. Controlling those two, temperature and time, produces the intended viscosity level of the processed PPS resin. As the heating device, usable is any of ordinary hot air driers or rotary or stirrer-combined heaters. However, preferred are rotary or stirrer-combined heaters for efficient and uniform heat treatment.

One example of heating PPS resins in an inert gas atmosphere such as nitrogen or under reduced pressure comprises heating a PPS resin in an inert gas atmosphere such as nitrogen or under reduced pressure at a heating temperature that may fall between 150 and 280°C, preferably between 200 and 270°C, for 0.5 to 100 hours, preferably for 2 to 50 hours. As the heating device, usable is any of ordinary hot air driers or rotary or stirrer-combined heaters. However, preferred are rotary or stirrer-combined heaters for efficient and uniform heat treatment.

PPS resins for use in the invention are preferably deionized ones. For the deionization, for example, PPS resins may be washed with acidic aqueous solutions, hot water, or organic solvents. Those washing treatments may be combined, if desired.

One example of washing PPS resins with organic solvents is referred to below. The organic solvent to be used for the washing is not specifically defined, provided that it does not decompose PPS resins. For example, employable is any of nitrogen-containing polar solvents such as N-methylpyrrolidone, dimethylformamide, dimethylacetamide; sulfoxide-type and sulfone-type solvents such as dimethylsulfoxide, dimethylsulfone; ketone-type solvents such as acetone, methyl ethyl ketone, diethyl ketone, acetophenone; ether-type solvents such as dimethyl ether, dipropyl ether, tetrahydrofuran; halogen-containing solvents such as chloroform, methylene chloride, trichloroethylene, dichloroethylene, dichloroethane, tetrachloroethane, chlorobenzene; alcoholic and phenolic solvents such as methanol, ethanol, propanol, butanol, pentanol, ethylene glycol, propylene glycol, phenol, cresol, polyethylene glycol; and aromatic hydrocarbon solvents such as benzene, toluene, xylene. Of those organic solvents, especially preferred are N-methylpyrrolidone, acetone, dimethylformamide and chloroform. The organic solvents can be used in a single or mixed solvent system. To wash PPS resins with such an organic solvent, for example, the resins are dipped in the organic solvent optionally with stirring or heating them. The washing for the treatment is not specifically defined and be from room temperature to 300°C or so. The higher the temperature is, the higher is the washing efficiency to be attained. In general, however, the washing temperature may be from room temperature to 150°C or so to produce good results. It is desirable to further wash the PPS resins that have been washed with organic solvents, several times with cold water or lukewarm water, thereby removing the remaining organic solvents from the PPS resins.

One example of processing PPS resins with hot water is referred to. Water for the treatment is preferably distilled water or deionized water, with which PPS resins can be favorably processed to have good chemical modifications. For the treatment of PPS resins with hot water, in general, a predetermined amount of the PPS resin to be treated is put into a amount of water, and heated with stirring under normal or elevated pressure. Regarding the ratio of the PPS resin to water, it is desirable that the amount of water is larger than that of the PPS resin. In general, the bath ratio is so determined that the amount of the PPS resin to be treated in one liter of water is not larger than 200 g.

One example of processing PPS resins with acids is referred to. PPS resins are dipped in acids or acidic aqueous solutions optionally with heating or stirring. Acids to be used for the treatment are not specifically defined, provided that they do not decompose PPS resins. For example, employable is any of aliphatic saturated monocarboxylic acids such as formic acid, acetic acid, propionic acid, butyric acid; halogen-substituted, aliphatic saturated carboxylic acids such as chloroacetic acid, dichloroacetic acid; aliphatic unsaturated monocarboxylic acids such as acrylic acid, crotonic acid; aromatic carboxylic acids such as benzoic acid, salicylic acid; dicarboxylic acids such as oxalic acid, malonic acid, succinic acid, phthalic acid, fumaric acid; and inorganic acidic compounds such as sulfuric acid, phosphoric acid, hydrochloric acid, carbonic acid, silicic acid. Of those, preferred are acetic acid and hydrochloric acid. It is desirable to further wash the acid-processed PPS resins several times with cold water or lukewarm water, thereby removing the remaining acids and salts from the PPS resins. Water to be used for the washing is preferably distilled or deionized water, as not interfering with the favorable chemical modifications of the acid-processed PPS resins.

The addition of (B) an olefinic copolymer having at least one functional group selected from epoxy groups, acid anhydride groups, carboxyl group and its salts and carboxylate groups, to the thermoplastic resin composition that constitutes the layer (a), is employed for enhancing the interlayer adhesion and the stiffness of the moldings comprising the composition, and enhancing the flexibility of the tubular moldings comprising it. The functional group-having olefinic copolymer has at least one functional group selected from epoxy groups, acid anhydride groups, carboxyl group and its salts, and carboxylate groups.

As examples of the epoxy group-having olefinic polymers, mentioned are olefinic copolymers having any of glycidyl esters, glycidyl ethers and glycidyldiamines in their side chains; and those as prepared by epoxidative oxidation of the double bond(s) of double bond-having olefinic copolymers. Of the epoxy group-having olefinic copolymers, preferred are those as prepared through copolymerization of epoxy group-having monomers. Especially preferred are olefinic copolymers consisting essentially of α-olefins and glycidyl esters of α,β-unsaturated acids.

The α-olefins include, for example, ethylene, propylene, butene-1, 4-methylpentene-1, hexene-1, decene-1 and octene-1. Of those, preferred is ethylene. If desired, their mixtures can be used.

The glycidyl esters of α,β-unsaturated acids may be represented by the following general formula, which include, for example, glycidyl acrylate, glycidyl methacrylate and glycidyl ethacrylate. Preferred is glycidyl methacrylate. 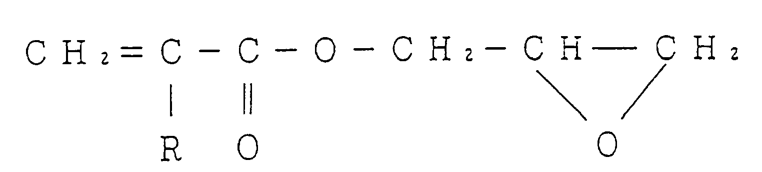 wherein R represents a hydrogen atom or a lower alkyl group.

The olefinic copolymers of that type consisting essentially of α-olefins and glycidyl esters of α,β-unsaturated acids may be any of random, block and graft copolymers of α-olefins and glycidyl esters of α,β-unsaturated acids such as those mentioned above.

In those olefinic copolymers consisting essentially of α-olefins and glycidyl esters of α,β-unsaturated acids, the amount of the copolymerized glycidyl esters is preferably from 0.5 to 40 % by weight, more preferably from 3 to 30 % by weight, from the viewpoints of the influence of the comonomers on the targeted objects of the invention, and also their influences on the polymerizability of the comonomers and on the gellation, the heat resistance, the fluidity and the strength of the copolymers.

As the epoxy group-having olefinic copolymers for use in the invention, also preferred are those indispensably comprising components of (1) α-olefins, (2) glycidyl esters of α,β-unsaturated acids, and (3) additional monomers of the following general formula: 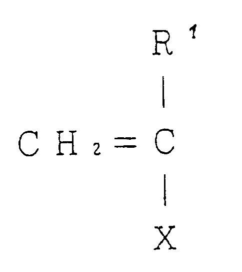 wherein R¹ represents a hydrogen atom or a lower alkyl group; X represents a group selected from - COOR², -CN and aromatic groups; and R² represents an alkyl group having from 1 to 10 carbon atoms.

For the details of (1) α-olefins and (2) glycidyl esters of α,β-unsaturated acids to be used in producing the olefinic copolymers of that type, referred to are those as mentioned hereinabove for the olefinic copolymer (B).

Examples of the monomers (3) include alkyl esters of α,β-unsaturated carboxylic acids, such as methyl acrylate, ethyl acrylate, n-propyl acrylate, isopropyl acrylate, n-butyl acrylate, t-butyl acrylate, isobutyl acrylate, methyl methacrylate, ethyl methacrylate, n-propyl methacrylate, isopropyl methacrylate, n-butyl methacrylate, t-butyl methacrylate, isobutyl methacrylate; acrylonitrile, styrene, α-methylstyrene; and styrene derivatives and acrylonitrilestyrene copolymers in which the aromatic ring is substituted by alkyl group(s). Two or more of those monomers can be used as combined.

The olefinic copolymers of that type may be any of random and/or block and/or graft copolymers of those α-olefins (1), glycidyl esters of α,β-unsaturated acids (2) and monomers (3). For example, the copolymers may be prepared through two or more different types of copolymerization of graft-copolymerizing a random copolymer of α-olefins (1) and glycidyl esters of α,β-unsaturated acids (2) with monomers (3).

The ratio of the comonomers to be copolymerized into the olefinic copolymers, α-olefin (1)/glycidyl ester of α,β-unsaturated acid (2), is preferably from 60/40 to 99/1 in terms of % by weight, from the viewpoints of the influence of the comonomers on the targeted objects of the invention, and also their influences on the polymerizability of the comonomers and on the gellation, the heat resistance, the fluidity and the strength of the copolymers. The ratio of the comonomer (3) to those α-olefin (1) and glycidyl ester of α,β-unsaturated acid (2), (3)/[(1) + (2)], is preferably from 5/95 to 60/40 in term of % by weight.

The polyolefinic copolymers having any of carboxyl group and its salts, carboxylate groups and acid anhydride groups, which are preferably used in the invention, include, for example, those as prepared by copolymerizing polyolefinic resins of, for example, polyethylenes, polypropylenes, polystyrenes, ethylene-propylene copolymers, ethylene-butene copolymers, polybutene, ethylene-propylene-diene copolymers, styrene-butadiene copolymers, styrene-butadiene-styrene (SBS) block copolymers, styrene-isoprene-styrene (SIS) copolymers, polybutadienes, butadiene-acrylonitrile copolymers, polyisoprenes, butene-isoprene copolymers, styrene-ethylene-butylene-styrene (SEBS) block copolymers and styrene-ethylene-propylene-styrene (SEPS) block copolymers, with comonomers of, for example, maleic anhydride, succinic anhydride, fumaric anhydride, acrylic acid, methacrylic acid, vinyl acetate, and their salts such as Na, Zn, K, Ca and Mg salts, and methyl acrylate, methyl methacrylate, ethyl acrylate, ethyl methacrylate, propyl acrylate, propyl methacrylate, butyl acrylate and butyl methacrylate. As examples of those copolymers, concretely mentioned are olefin-(meth)acrylate copolymers such as ethylene-methyl acrylate copolymers, ethylene-ethyl acrylate copolymers, ethylene-n-propyl acrylate copolymers, ethylene isopropyl acrylate copolymers, ethylene-n-butyl acrylate copolymers, ethylene-t-butyl acrylate copolymers, ethylene-isobutyl acrylate copolymers, ethylene-methyl methacrylate copolymers, ethylene-ethyl methacrylate copolymers, ethylene-n-propyl methacrylate copolymers, ethylene-isopropyl methacrylate copolymers, ethylene-n-butyl methacrylate copolymers, ethylene-t-butyl methacrylate copolymers, ethylene-isobutyl methacrylate copolymers; (meth)acrylate-acrylonitrile copolymers such as methyl acrylate-acrylonitrile copolymers, methyl methacrylate-acrylonitrile copolymers, propyl acrylate-acrylonitrile copolymers, propyl methacrylate-acrylonitrile copolymers, butyl acrylate-acrylonitrile copolymers, butyl methacrylate-acrylonitrile copolymers; ethylene-(meth)acrylate copolymers and their metal salts such as Na, Zn, K, Ca and Mg salts; ethylene-maleic anhydride copolymers, ethylene-butene-maleic anhydride copolymers, ethylene-butene-maleic anhydride copolymers, ethylene-maleic anhydride copolymers, propylene-maleic anhydride copolymers, and also maleic anhydride-modified SBS, SIS, SEBS, SEPS, and ethylene-ethyl acrylate copolymers.

The copolymerization mode for those olefinic copolymers is not specifically defined, and the copolymers may be any of random copolymers, graft copolymers and block copolymers.

The amount of the olefinic copolymer (B) having at least one functional group selected from epoxy groups, acid anhydride groups, carboxyl group and its salts and carboxylate groups, in the thermoplastic resin composition, is from 1 to 200 parts by weight, preferably from 1 to 100 parts by weight, more preferably from 3 to 50 parts by weight, relative to 100 parts by weight of the PPS resin (A) to be in the composition, from the viewpoints of the gas permeation resistance, the flexibility and the impact strength of the moldings comprising the composition and of the tube moldability of the composition.

Two or more olefinic copolymers (B) may be in the composition. A combination of an epoxy group-having olefinic copolymer (B1) and an acid anhydride group-having olefinic copolymer (B2) is preferably incorporated into the composition to enhance the stiffness and the interlayer adhesion of the moldings comprising the composition. For the details of the epoxy group-having olefinic copolymer (B1) and the acid anhydride group-having olefinic copolymer (B2), referred to are the examples of those copolymers mentioned hereinabove.

For the combination of those two, functional group-having olefinic copolymers, the ratio of (B1) to (B2), (B1)/(B2), is preferably from 1/99 to 99/1, more preferably from 5/95 to 50/50, in terms of % by weight, with the total of (B1) and (B2) being 100 % by weight.

Preferably, the thermoplastic resin composition may further contain an elastomer (C) having none of epoxy groups, acid anhydride groups, carboxyl group and its salts and carboxylate groups, especially along with the functional group-having olefinic copolymer (B). The composition containing the elastomer (C) is preferred, as having good moldability to produce hollow moldings with good inner surface smoothness and high stiffness.

The elastomer (C) includes, for example, polyolefinic elastomers, dienic elastomers, silicone rubbers, fluorine rubbers, urethane rubbers and other various thermoplastic elastomers. As examples of the polyolefinic elastomers, mentioned are ethylene-propylene copolymers, ethylene-butene copolymers, polybutenes, and ethylene-propylene-diene copolymers. As examples of the dienic elastomers, mentioned are styrene-butadiene copolymers, polybutadienes, butadiene-acrylonitrile copolymers, polyisoprenes, butene-isoprene copolymers, SBS, SIS, SEBS, and SEPS.

Of those, especially preferred are ethylene-propylene copolymers, ethylene-butene copolymers, and ethylene-propylene-diene copolymers. Two or more those elastomers (C) can be in the resin composition, as combined.

The preferred amount of the elastomer (C) that may be in the resin composition may be from 5 to 200 parts by weight, preferably from 5 to 100 parts by weight, more preferably from 10 to 80 parts by weight, relative to 100 parts by weight of the PPS resin (A) to be in the composition, from the viewpoints of the alcohol-gasoline permeation resistance, the flexibility and the impact resistance of the moldings comprising the composition and of the tube moldability of the composition.

Where the elastomer (C) is added to the resin composition along with the functional group-having olefinic copolymer (B), the total amount of the elastomer (C) and the copolymer (B) is preferably not larger than 200 parts by weight, more preferably not larger than 100 parts by weight, even more preferably not larger than 70 parts by weight, relative to 100 parts by weight of the PPS resin (A) to be in the composition, from the viewpoint of the alcohol-gasoline permeation resistance of the moldings comprising the composition.

Also preferred is addition of an alkoxysilane (E) having at least one functional group selected from epoxy groups, amino groups, isocyanato groups, hydroxyl groups, mercapto groups and ureido groups, to the thermoplastic resin composition, as enhancing the mechanical strength, the stiffness and the interlayer adhesion of the moldings comprising the composition and also enhancing the moldability of the composition into hollow moldings. As examples of the alkoxysilane (E), mentioned are epoxy group-having alkoxysilanes such as γ-glycidoxypropyltrimethoxysilane, γ-glycidoxypropyltriethoxysilane, β-(3,4-epoxycyclohexyl)ethyltrimethoxysilane; mercapto group-having alkoxysilanes such as γ-mercaptopropyltrimethoxysilane, γ-mercaptopropyltriethoxysilane; ureido group-having alkoxysilanes such as γ-ureidopropyltriethoxysilane, γ-ureidopropyltrimethoxysilane, γ-(2-ureidoethyl)aminopropyltrimethoxysilane; isocyanato group-having alkoxysilanes such as γ-isocyanatopropyltriethoxysilane, γ-isocyanatopropyltrimethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane, γ-isocyanatopropyltrichlorosilane; amino group-having alkoxysilanes such as γ-(2-aminoethyl)aminopropylmethyldimethoxysilane, γ-(2-aminoethyl)aminopropyltrimethoxysilane, γ-aminopropyltrimethoxysilane; and hydroxyl group-having alkoxysilanes such as γ-hydroxypropyltrimethoxysilane, γ-hydroxypropyltriethoxysilane. Of those, preferred are epoxy group-having alkoxysilanes such as γ-glycidoxypropyltrimethoxysilane, γ-glycidoxypropyltriethoxysilane, β-(3,4-epoxycyclohexyl)ethyltrimethoxysilane; ureido group-having alkoxysilanes such as γ-ureidopropyltriethoxysilane, γ-ureidopropyltrimethoxysilane, γ-(2-ureidoethyl)aminopropyltrimethoxysilane; amino group-having alkoxysilanes such as γ-(2-aminoethyl)aminopropylmethyldimethoxysilane, γ-(2-aminoethyl)aminopropyltrimethoxysilane, γ-aminopropyltrimethoxysilane; and isocyanato group-having alkoxysilanes such as γ-isocyanatopropyltriethoxysilane, γ-isocyanatopropyltrimethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane, γ-isocyanatopropyltrichlorosilane.

The amount of the alkoxysilane compound (E) that may be in the resin composition may be from 0.05 to 5 parts by weight, preferably from 0.1 to 3 parts by weight, relative to 100 parts by weight of the PPS resin (A) to be in the composition.

As examples of the thermoplastic resin (D) consisting essentially of repeating units as bonded together via at least one bonding mode selected from amido bonds, ester bonds and urethane bonds, mentioned are polyamide resins, saturated polyester resins, and thermoplastic polyurethane resins. For the details of those resins, referred to are the same as those mentioned hereinabove for the layer (b), and the detailed description of those resins is omitted herein.

The amount of the thermoplastic resin (D) that may be in the resin composition may be from 5 to 200 parts by weight, preferably from 10 to 100 parts by weight, more preferably from 10 to 70 parts by weight, relative to 100 parts by weight of the PPS resin (A) to be in the composition, from the viewpoints of the alcohol-gasoline permeation resistance, the flexibility, the impact strength and the interlayer adhesion of the moldings comprising the composition and of the tube moldability of the composition.

The addition of one or more thermoplastic resins (D) to the PPS resin (A) to be in the PPS resin composition that is to constitute the layer (a) is especially effective in increasing the strength of interlayer adhesion of the layer (a) to the adjacent layers. In this case, where the thermoplastic resin (D) to be in the layer (a) of the PPS resin composition is a polyamide resin, it is preferred that the layers to be adjacent to the layer (a) are made from polyamide resins in order to further enhance the strength of interlayer adhesion between those layers. Where the layers adjacent to the layer (a) are made from polyamide resins and where the thermoplastic resin (D) existing in the PPS resin composition for the layer (a) is nylon 6, it is more preferred that the layers adjacent to the layer (a) are of nylon 6 from the viewpoint of the interlayer adhesion between those layers. However, the layers adjacent to the layer (a) may also be of any other polyamide resins such as nylon 66 and nylon 11 to attain the intended interlayer adhesion.

Now described in detail hereinunder is the electroconductive, thermoplastic resin composition for the layer (c), which indispensably comprises an electroconductive filler and/or an electroconductive polymer.

The thermoplastic resin (F) to be in the composition includes, for example, PPS resins such as those mentioned hereinabove, and saturated polyester resins, polysulfone resins, tetrafluoroethylene resins, polyether-imide resins, polyamidimide resins, polyamide resins, polyimide resins, polyether-sulfone resins, polyether-ketone resins, polythioether-ketone resins, polyether-ether-ketone resins, thermoplastic polyurethane resins, polyolefin resins, ABS resins, polyamide elastomers, and polyester elastomers.

Of those, preferred are one or more selected from polyphenylene sulfide resins, polyamide resins, and thermoplastic polyester resins. For the details of those thermoplastic resins, referred to are those mentioned hereinabove for the layers (a) and (b), and the detailed description of those resins is omitted herein.

In order to further enhance the interlayer adhesion of the moldings of the invention, it is preferable that the thermoplastic resin (F) is similar in kind to at least one resin that constitutes the layers to be adjacent to the layer (c).

Addition of a thermoplastic resin that comprises an olefinic copolymer (B) having at least one functional group selected from epoxy groups, acid anhydride groups, carboxyl group and its salts and carboxylate groups to the resin composition for the layer (c) is preferred in order to further enhance the stiffness and the interlayer adhesion of the moldings comprising the composition. For the details of the thermoplastic resin that comprises the functional group-having olefinic copolymer (B), referred to are those mentioned hereinabove for the layer (a), and the detailed description of the resin is omitted herein.

Also preferred is addition of an elastomer (C) having none of epoxy groups, acid anhydride groups, carboxyl group and its salts and carboxylate groups to the resin composition for the layer (c), in order to further improve the balance between the stiffness of the moldings comprising the composition and the fluidity of the composition. For the details of the elastomer (C) to be in the layer (c), referred to are those mentioned hereinabove for the layer (a), and the detailed description of the elastomer (C) is omitted herein.

The compositional proportions of the constituent components that constitute the resin moiety in the electroconductive, thermoplastic resin composition for the layer (c), except for the electroconductive filler and the electroconductive polymer to be in the composition, are preferably such that the amount of the thermoplastic resin (F) is from 40 to 98 % by weight, the amount of the olefinic copolymer (B) having at least one functional group selected from epoxy groups, acid anhydride groups, carboxyl group and its salts and carboxylate groups is from 2 to 60 % by weight, and the amount of the elastomer (C) having none of epoxy groups, acid anhydride groups, carboxyl group and its salt and carboxylate groups is from 0 to 58 % by weight, or such that the amount of the functional group-having olefinic copolymer (B) is from 1 to 100 parts by weight, more preferably from 1 to 50 parts by weight, even more preferably from 1 to 20 parts by weight, relative to 100 parts by weight of the thermoplastic resin (F), from the viewpoints of the stiffness and the surface smoothness of the moldings comprising the composition and of the extrusion moldability of the composition.

Two or more, functional group-having olefinic copolymers (B) may be in the composition. A combination of at least two, functional group-having olefinic copolymers, an epoxy group-having olefinic copolymer (B1) and an acid anhydride group-having olefinic copolymer (B2) is preferably incorporated into the composition to enhance the stiffness of the moldings comprising the composition. For the combination of those two, functional group-having olefinic copolymers, the ratio of (B1) to (B2), (B1)/(B2), is preferably from 1/99 to 99/1, more preferably from 30/70 to 70 /30 , in terms of % by weight, with the total of (B1) and (B2) being 100 % by weight.

Now described in detail hereinunder are the electroconductive filler and the electroconductive polymer of (G). The electroconductive filler for use in the invention is not specifically defined, and any and every electroconductive filler that is generally used for making resins electroconductive is usable in the invention, including, for example, metal powders, metal flakes, metal ribbons, metal fibers, metal oxides, inorganic fillers coated with electroconductive substances, carbon powders, graphites, carbon fibers, and carbon flakes.

As examples of the metals of those metal powders, metal flakes and metal ribbons, mentioned are silver, nickel, copper, zinc, aluminium, stainless steel, iron, brass, chromium and tin.

As examples of the metals of the metal fibers, mentioned are iron, copper, stainless steel, aluminium and brass.

Those metal powders, metal flakes, metal ribbons and metal fibers may be surface-treated with, for example, titanate, aluminium or silane surface-treating agents.

Examples of the metal oxides are SnO2 (doped with antimony), In2O3 (doped with antimony), and ZnO (doped with aluminium), which may be surface-treated with, for example, titanate, aluminium or silane surface-treating agents.

Examples of the electroconductive substances for the inorganic fillers coated with them are aluminium, nickel, silver, carbon, SnO2 (doped with antimony), and In2O3 (doped with antimony). Examples of the inorganic fillers to be coated with those substances are mica, glass beads, glass fibers, carbon fibers, potassium titanate whiskers, barium sulfate, zinc oxide, titanium oxide, aluminium borate whiskers, zinc oxide whiskers, titanium oxide whiskers, and silicon carbide whiskers. For coating the inorganic fillers with those electroconductive substances, for example, employable is any of vacuum vapor deposition, sputtering, chemical plating, and baking. The coated inorganic fillers may be surface-treated with, for example, titanate, aluminium or silane surface-treating agents.

Depending on the starting materials and the production methods used for producing them, carbon powders are grouped into different types of acetylene black, gas black, oil black, naphthalene black, thermal black, furnace black, lump black, channel black, roll black, and disc black. The carbon powders usable in the invention are not specifically defined with respect to the starting materials and the production methods for producing them, but preferred are acetylene black and furnace black. Various types of carbon powders are produced, having different characteristics of grain size, surface area, DBP absorption and ash content. The carbon powders usable in the invention are not specifically defined with respect to such their characteristics. However, from the viewpoint of the balance between their mechanical strength and electroconductivity, the carbon powders for use in the invention are preferably such that their mean grain size is not larger than 500 nm, preferably from 5 to 100 nm, more preferably from 10 to 70 nm; their specific surface area (as measured by a BET method) is not smaller than 10 m²/g, preferably not smaller than 30 m²/g, more preferably not smaller than 500 m²/g, even more preferably not smaller than 800 m²/g; their DBP absorption is not smaller than 50 ml/100 g, preferably not smaller than 100 ml/100 g; and their ash content is not larger than 0.5 %, preferably not larger than 0.3 %.

The carbon powders for use in the invention may be surface-treated with, for example, titanate, aluminium or silane surface-treating agents. In order to improve their melt-kneadability, the carbon powders may be granulated.

The innermost or outermost layer of the hollow moldings of the invention is often required to have good surface smoothness. From this viewpoint, it is desirable that the electroconductive filler to be used in the invention is not a fibrous one having a high aspect ratio, but a powdery, granular, tabular or flaky one or a fibrous one having a ratio, length/diameter, of not larger than 200 when existing in the resin composition.

Examples of the electroconductive polymer for use in the invention are polyaniline, polypyrrole, polyacetylene, poly(paraphenylene), polythiophene, and polyphenylene-vinylene. Two or more those electroconductive fillers and/or electroconductive polymers can be in the resin composition. Of those electroconductive fillers and electroconductive polymers, especially preferred is carbon black, which has a high mechanical strength and is inexpensive.

The amount of the electroconductive filler and/or the electroconductive polymer to be in the resin composition varies, depending on their type, and should not be defined unconditionally. However, from the viewpoint of the balance between their electroconductivity, fluidity and mechanical strength, their amount may be from 1 to 100 parts by weight, preferably from 1 to 50 parts by weight, relative to 100 parts by weight of the resin composition. In order to ensure its satisfactory antistatic ability, it is desirable that the electroconductive resin composition has a volume resistivity of not larger than 10¹⁰ Ω cm. The electroconductive filler and the electroconductive polymer to be in the composition often lower the mechanical strength and the fluidity of the composition. Therefore, it is desirable that the amount of the electroconductive filler and the electroconductive polymer to be in the composition is as small as possible, so far as the electroconductive level of the composition is an intended one. The intended electroconductive level of the composition varies, depending on the use of the composition, but may be generally from larger than 100 Ω cm up to 10¹⁰ Ω cm in terms of the volume resistivity of the composition.

In particular, where an electroconductive PPS resin composition is used to form the electroconductive layer of the moldings of the invention, the composition is preferably as follows. The electroconductive PPS resin composition that is suitable for the electroconductive layer of the hollow moldings of the invention indispensably comprises (A) a polyphenylene sulfide resin, (G) an electroconductive f iller and/or an electroconductive polymer, and (B) an olefinic copolymer having at least one functional group selected from epoxy groups, acid anhydride groups, carboxyl group and its salts and carboxylate groups, in which the amount of the functional group-having olefinic copolymer (B) is from 1 to 200 parts by weight relative to 100 parts by weight of the polyphenylene sulfide resin (A).

For the details of the PPS resin (A) to be in the electroconductive resin composition of that type, referred to are those mentioned hereinabove, and the detailed description of the PPS resin (A) is omitted herein.

For the details of the electroconductive filler and the electroconductive polymer (G) to be in the composition, also referred to are those mentioned hereinabove, and the detailed description of those filler and polymer (G) is omitted herein.

Addition to the resin composition of an olefinic copolymer(B) having at least one functional group selected from epoxy groups, acid anhydride groups, carboxyl group and its salts and carboxylate groups is preferred, in order to ensure good interlayer adhesion and high stiffness of the moldings comprising the composition and to ensure good flexibility of the tubular moldings comprising it. For the details of the polymers(B), referred to are those mentioned hereinabove, and the detailed description of the polymers(B) is omitted herein.

The amount of the olefinic coplymer (B) having at least one functional group selected from epoxy groups, acid anhydride groups, carboxyl group and its salts and carboxylate groups to be in the electroconductive PPS resin composition may be from 1 to 200 parts by weight, preferably from 1 to 100 parts by weight, more preferably from 3 to 50 parts by weight, relative to 100 parts by weight of the PPS resin (A), from the viewpoints of the gas permeation resistance, the flexibility and the impact resistance of the moldings comprising the composition and of the moldability of the composition into tubes.

Two or more such olefinic copolymer (B) having at least one functional group selected from epoxy groups, acid anhydride groups, carboxyl group and its salts and carboxylate groups may be in the composition, as combined. Especially preferred is a combination of (B1) an epoxy group-having olefinic copolymer and (B2) an acid anhydride group-having olefinic copolymer, as ensuring high stiffness of the moldings comprising the composition. For the details of the epoxy group-having olefinic copolymer (B1) and the acid anhydride group-having olefinic copolymer (B2), referred to are those mentioned hereinabove.

Where those two, functional group-having olefinic copolymers (B1) and (B2) are in the composition, the ratio of (B1) to (B2), (B1)/(B2), is preferably from 1/99 to 99/1, more preferably from 5/95 to 50/50, in terms of % by weight, with the total of (B1) and (B2) being 100 % by weight.

Preferably, the resin composition may further contain an elastomer (C) having none of epoxy groups, acid anhydride groups, carboxyl group and its salts and carboxylate groups, especially along with the functional group-having olefinic copolymer (B). The composition containing the elastomer (C) along with the functional group-having olefinic copolymer (B) is preferred, as having good moldability to produce tubular or hollow moldings with good surface smoothness and high mechanical strength. For the details of the elastomer (C), referred to are those mentioned hereinabove, and the detailed description of the elastomer (C) is omitted herein.

The preferred amount of the elastomer (C) that may be in the resin composition may be from 5 to 200 parts by weight, preferably from 5 to 100 parts by weight, more preferably from 10 to 80 parts by weight, relative to 100 parts by weight of the PPS resin (A) to be in the composition, from the viewpoints of the gasoline permeation resistance, the flexibility and the impact resistance of the moldings comprising the composition and of the tube moldability of the composition.

Where the elastomer (C) is added to the resin composition along with the functional group-having olefinic copolymer (B), the total amount of the elastomer (C) and the resin (B) is preferably not larger than 200 parts by weight, more preferably not larger than 100 parts by weight, even more preferably not larger than 70 parts by weight, relative to 100 parts by weight of the PPS resin (A) to be in the composition, from the viewpoint of the gasoline permeation resistance of the moldings comprising the composition.

Also preferred is addition of an alkoxysilane (E) to the resin composition. Preferably, the alkoxysilane (E) has at least one functional group selected from epoxy groups, amino groups, isocyanato groups, hydroxyl groups, mercapto groups and ureido groups. The addition of such an alkoxysilane (E) to the resin composition is effective in enhancing the mechanical strength, the stiffness and the interlayer adhesion of the moldings comprising the composition and also enhancing the moldability of the composition into hollow moldings. As examples of the alkoxysilane (E), mentioned are epoxy group-having alkoxysilanes such as γ-glycidoxypropyltrimethoxysilane, γ-glycidoxypropyltriethoxysilane, β-(3,4-epoxycyclohexyl)ethyltrimethoxysilane; mercapto group-having alkoxysilanes such as γ-mercaptopropyltrimethoxysilane, γ-mercaptopropyltriethoxysilane; ureido group-having alkoxysilanes such as γ-ureidopropyltriethoxysilane, γ-ureidopropyltrimethoxysilane, γ-(2-ureidoethyl)aminopropyltrimethoxysilane; isocyanato group-having alkoxysilanes such as γ-isocyanatopropyltriethoxysilane, γ-isocyanatopropyltrimethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane, γ-isocyanatopropyltrichlorosilane; amino group-having alkoxysilanes such as γ-(2-aminoethyl)aminopropylmethyldimethoxysilane, γ-(2-aminoethyl)aminopropyltrimethoxysilane, γ-aminopropyltrimethoxysilane; and hydroxyl group-having alkoxysilanes such as y-hydroxypropyltrimethoxysilane, γ-hydroxypropyltriethoxysilane. Of those, preferred are epoxy group-having alkoxysilanes such as γ-glycidoxypropyltrimethoxysilane, γ-glycidoxypropyltriethoxysilane, β-(3,4-epoxycyclohexyl)ethyltrimethoxysilane; ureido group-having alkoxysilanes such as γ-ureidopropyltriethoxysilane, γ-ureidopropyltrimethoxysilane, γ-(2-ureidoethyl)aminopropyltrimethoxysilane; amino group-having alkoxysilanes such as γ-(2-aminoethyl)aminopropylmethyldimethoxysilane, γ-(2-aminoethyl)aminopropyltrimethoxysilane, γ-aminopropyltrimethoxysilane; and isocyanato group-having alkoxysilanes such as γ-isocyanatopropyltriethoxysilane, γ-isocyanatopropyltrimethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane, γ-isocyanatopropyltrichlorosilane.

The amount of the alkoxysilane compound (E) that may be in the resin composition may be from 0.05 to 5 parts by weight, preferably from 0.1 to 3 parts by weight, relative to 100 parts by weight of the PPS resin (A) to be in the composition.

As examples of the thermoplastic resin (D) consisting essentially of repeating units as bonded together via at least one bonding mode selected from amido bonds, ester bonds and urethane bonds, mentioned are polyamide resins, saturated polyester resins, and thermoplastic polyurethane resins. For the details of those resins, referred to are those mentioned hereinabove, and the detailed description of those resins is omitted herein.

The amount of the thermoplastic resin (D) that may be in the resin composition may be from 5 to 200 parts by weight, preferably from 10 to 100 parts by weight, more preferably from 10 to 70 parts by weight, relative to 100 parts by weight of the PPS resin (A) to be in the composition, from the viewpoints of the gasoline permeation resistance, the flexibility, the interlayer adhesion and the impact strength of the moldings comprising the composition and of the tube moldability of the composition.

Where the thermoplastic resin (D) to be in the layer of the electroconductive PPS resin composition is a polyamide resin, it is preferred that the thermoplastic resin except PPS resins which is to constitute the layer (b) is also a polyamide resin in order to further enhance the strength of interlayer adhesion between those layers. In particular, where the polyamide resin for the thermoplastic resin (D) that is to be in the electroconductive PPS resin composition is nylon 6, it is more preferred that the thermoplastic resin except PPS resins which is to constitute the layer (b) is also nylon 6 in order to much more enhance the strength of interlayer adhesion between those layers. However, the thermoplastic resin that is to constitute the layer (b) may also be any other polyamide resin such as nylon 66 and nylon 11 to attain the intended interlayer adhesion.

The electroconductive resin composition is preferably a thermoplastic resin composition capable of being molded into moldings with good surface smoothness. Concretely, the preferred thermoplastic resin composition is characterized in that, when it is put into a melt indexer (315.5°C, residence time of 5 minutes, load of 5 kg, orifice diameter of 0.0825 inches, orifice length of 0.315 inches) to obtain a gut and when the gut is projected through a projector, the number of projections having a height of not shorter than 25 µm as seen in the surface of the gut is not more than 5, preferably not more than 2, more preferably not more than 1, per cm of the gut.

In order that the resin composition ensures such good surface smoothness of its moldings, it is effective to use a thermoplastic resin having a relatively high molecular weight as the resin (F).

In many cases, the thermoplastic resin (F) is available as its pellets, which may be ground into granules having a weight-average grain size of not larger than 2 mm, or even into powders. Melt-kneading the resulting granules or powders of the resin (F) with an electroconductive filler (G) is also effective in the surface smoothness of the moldings of the composition. If desired, the granules or powders of the resin (F) having a weight-average grain size of not larger than 2 mm may be combined with pellets of the resin (F).

Where a thermoplastic resin (F), an electroconductive filler (G) and an olefinic copolymer (B) having at least one functional group selected from epoxy groups, acid anhydride groups, carboxyl group and its salts and carboxylate groups are used to prepare the resin composition, effectively employed is a method that comprises melt-kneading the thermoplastic resin (F) and the electroconductive filler (G) followed by further melt-kneading the resulting mixture with the functional group-having olefinic copolymer (B). The composition as prepared by the multi-stage melt-kneading method can be molded into moldings with much improved surface smoothness.

In carrying out the multi-stage melt-kneading method that comprises melt-kneading the thermoplastic resin (F) and the electroconductive filler (G) followed by further melt-kneading the resulting mixture with the functional group-having olefinic copolymer (B), for example, the components to be melt-kneaded in the first stage may be fed into the kneader through a main hopper while those to be added to and melt-kneaded with the resulting in the second stage may be fed thereinto through a slide feeder.

The electroconductive resin composition preferably has a melt viscosity of from 1,000 to 20,000 poises, more preferably from 1,000 to 10,000 poises, when measured as 270 °C and at a shear rate of 1000/sec. The melt viscosity falling within the range is relatively too high for the composition comprising, as the thermoplastic resin (F), a polyamide resin that comprises constitutional amido units each having from 8 to 15 carbon atoms per one amido group, and the composition comprising such a polyamide resin and having such a high melt viscosity is not preferred for ordinary hollow moldings.

However, in one aspect of the invention that provides a multilayered hollow molding as prepared through co-extrusion of at least two resin compositions, (d) an electroconductive, thermoplastic resin composition capable of being molded into moldings with good surface smoothness and (e-1) a resin composition comprising a polyphenylene sulfide resin in an amount of at least not smaller than 30 % by weight, the resin composition (d) is desired to have such a high melt viscosity as falling within the range defined as above. This is because, in the co-extrusion to prepare the hollow molding, the thermoplastic resin composition (d) is exposed to a high temperature of being at lowest 250°C or higher in order to well laminate the layer of the polyphenylene sulfide resin composition (e-1) and the layer of the electroconductive thermoplastic resin composition (d). At such a high temperature of not lower than 250°C, the resin composition (d) exhibits good moldability.

The thermoplastic resin compositions for the layers that constitute the multilayered moldings of the invention may contain non-electroconductive, fibrous and/or non-fibrous fillers, depending on the object and the use of the moldings and without overstepping the scope of the invention. As examples of the fibrous fillers employable herein, mentioned are glass fibers, milled glass fibers, carbon fibers, potassium titanate whiskers, zinc oxide whiskers, aluminium borate whiskers, aramide fibers, alumina fibers, silicon carbide fibers, ceramic fibers, asbestos fibers, gypsum fibers, and metal fibers. As examples of the non-fibrous fibers also employable herein, mentioned are silicates such as wollastonite, zeolite, sericite, kaolin, mica, clay, pyrophyllite, bentonite, asbestos, talc, alumina silicate; metallic compounds such as alumina, silicon oxide, magnesium oxide, zirconium oxide, titanium oxide; carbonates such as calcium carbonate, magnesium carbonate, dolomite; sulfates such as calcium sulfate, barium sulfate; hydroxides such as magnesium hydroxide, calcium hydroxide, aluminium hydroxide; and glass beads, ceramic beads, boron nitride, silicon carbide, and silica. These fillers may be hollow, and two or more of these fillers may be combined. These fibrous and/or non-fibrous fillers for use in the invention are preferably pre-treated with coupling agents of, for example, isocyanate compounds, organic silane compounds, organic titanate compounds, organic borane compounds or epoxy compounds to thereby enhance their mechanical strength. The amount of the fibrous and/or non-fibrous fillers, if added to the thermoplastic resin compositions, may be generally from 5 to 50 % by weight relative to the total weight of the composition.

In addition, the thermoplastic resin compositions for the layers that constitute the multilayered moldings of the invention may further contain any ordinary additives, which include, for example, plasticizers such as polyalkylene oxide oligomers, thioether compounds, ester compounds, organic phosphorus compounds; nucleating agents such as talc, kaolin, organic phosphorus compounds, polyether-etherketones; coloration inhibitors such as hypophosphites; and antioxidants, thermal stabilizers, lubricants, ultraviolet inhibitors, colorants, flame retardants, and foaming agents.

Methods for producing the resin compositions for the invention are not specifically defined. In one typical example for the production, a mixture of the constituent components is fed into any known melt mixer, such as a single-screw or double-screw extruder, a Bumbury mixer, a kneader or a mixing roll, and kneaded therein at a temperature that is higher than the melting point of the mixture by 10 to 50°C. The order in mixing the constituent components is not also specifically defined. For example, employable is any of a method comprising pre-mixing the constituent components all at once followed by melt-kneading the resulting mixture in the manner as mentioned above; a method comprising pre-mixing a part of the constituent components, then melt-kneading the resulting mixture in the manner as mentioned above, and thereafter adding the remaining part of the constituent components to the resulting melt followed by further melt-kneading them; and a method comprising pre-mixing a part of the constituent components followed by melt-kneading the resulting mixture in a single-screw or double-screw extruder into which the remaining part of the constituent components is fed through a side feeder. Minor additives, if desired, may be added to the pelletized compositions as prepared through kneading of the constituent components in the manner as mentioned above followed by pelletization of the resulting melt, and the pelletized compositions thus containing such minor additives may then be molded.

Such electroconductive resin compositions may have good moldability to give tubular or hollow moldings, and are especially suitable for tubular or hollow moldings with good gasoline permeation resistance, flexibility, impact resistance, and interlayer adhesion. However, the applications of the compositions are not limited to only such tubular or hollow moldings. Needless-to-say, the compositions can be subjected to injection molding and any other molding modes.

As one example of producing the multilayered hollow moldings of the invention, mentioned hereinunder is a method for producing multilayered tubular moldings, by which, however, the invention should not be restricted. Resin melts as extruded out through a plurality of extruders, the number of which corresponds to the number of the layers to be laminated to give the intended, multilayered tubes or to the number of the constituent components that shall constitutes the tubes, are introduced into one, multilayered tubular die, and the melts are laminated together still in the die or immediately after having been extruded out through the die to give the intended, multilayered tubes. Alternatively, single-layered tubes are once prepared, and their inner or outer surfaces may be laminated with other layers to give the intended, multilayered tubes.

To produce multilayered tubes that are composed of three or more layers, the number of the extruders to be used is increased, and those plural extruders are connected with a co-extrusion die, through which a multilayered parison is extruded out.

In the multilayered hollow moldings of the invention it is desirable that the layer of the electroconductive resin composition is the innermost one for the purpose of making the layer fully exhibit its electroconductive effect.

It is desirable that the multilayered hollow moldings of the invention have a total thickness falling between 0.2 mm and 3 mm in order that they have good hot water resistance and chemical resistance and also good flexibility as tubes. For the moldings that have the total thickness falling within the defined range, the thickness of the electroconductive layer in these is preferably from 3 % to 50 %, more preferably from 3 % to 20 % of their total thickness.

Preferred embodiments of the layer constitution for the electroconductive, multilayered hollow moldings of the invention are mentioned below, which, however, are not limitative.
Outer layer (b)/interlayer (a)/inner, electroconductive PPS layer (c)
Outer layer (b)/interlayer (a)/inner, electroconductive layer (c) not containing PPS

In these embodiments, the layer (a) is a layer comprising a polyphenylene sulfide resin composition; the layer (b) is a layer comprising a thermoplastic resin except polyphenylene sulfide resins, or comprising a thermoplastic resin composition that comprises a thermoplastic resin except polyphenylene sulfide resins; and the layer (c) is a layer comprising an electroconductive, thermoplastic resin composition that indispensably comprises an electroconductive filler and/or an electroconductive polymer.

The multilayered hollow moldings of the invention have good heat resistance, hot water resistance, chemical resistance and abrasion resistance, while having good outward appearance. In addition, they have good interlayer adhesion between the thermoplastic resin layer and the adjacent resin layers constituting them, and have good antistatic properties. Therefore, the multilayered hollow moldings of the invention, which may be blow moldings of, for example, bottles, tanks and ducts, or may be extrusion moldings of, for example, pipes and tubes, are effectively used as car parts, and electric and electronic parts, and even in various appliances for chemicals. In particular, the multilayered hollow moldings of the invention are favorably used as fuel tubes, especially those in internal engines for cars, with fully exhibiting their excellent characteristics mentioned above.

### DISCLOSURE OF PREFERRED EMBODIMENTS OF THE INVENTION

Now, the invention is described in more detail hereinunder with reference to the following Examples. Examples 1 to 15 are Reference Examples, directed to two-layer hollow moldings.

The volume resistivity, the interlayer adhesion strength, the alcohol-gasoline permeation resistance, the mechanical strength, the inner surface smoothness, the melt viscosity, the kink resistance, and the low-temperature stiffness of tubes, which are referred to in the following Examples, were determined according to the methods mentioned below.

### Volume Resistivity:

Pellets of an electroconductive resin composition to be tested were molded through injection molding at a resin temperature of being higher than the melting point of the resin by 40 to 50°C and at a mold temperature falling between 70 and 150°C, to give disc samples each having a thickness of 0.3 cm and a diameter of 100 mm. To measure the volume resistivity of those samples, used was a computing digital multimeter, TR6877 Model (manufactured by Takeda Riken Industry Co.).

### Interlayer Adhesion Strength:

A tube sample to be tested was cut into strips each having a width of 10 mm, in which the adjacent layers were peeled at an angle of 180 degrees to determine the adhesion strength per the unit length of the strip sample.

### Alcohol-gasoline Permeation Resistance:

A tube sample to be tested was cut to have a length of 30 cm. One end of the thus-cut sample was sealed, and an alcohol-gasoline mixture comprised of commercially-available regular gasoline and methyl alcohol in a ratio of 85/15 by weight was put thereinto. Then, the other end of the tube sample was sealed, and its total weight was measured. Next, this tube sample was kept in an explosion-proof oven at 40°C, whereupon the weight loss in the tube was measured. From those data, obtained was the alcohol-gasoline permeation resistance of the tube sample.

### Mechanical Strength (for Examples 1 to 13, and Comparative Examples 1 to 3):

Pellets of an electroconductive PPS resin composition to be tested were molded through injection molding at a resin temperature 320°C and at a mold temperature of 150°C. The notched Izod impact strength of each of the thus-molded samples was measured according to ASTMD256.

### Notched Izod Impact Strength (for Examples 33 to 42, and Comparative Examples 5 and 6):

Pellets of an electroconductive resin composition to be tested were molded through injection molding at a resin temperature of being higher than the melting point of the thermoplastic resin (F) by 50°C and at a mold temperature of 80°C. The notched Izod impact strength of each of the thus-molded samples was measured according to ASTMD256.

### Inner Surface Smoothness (for Examples 1 to 13, and Comparative Examples 1 to 3):

The condition and the roughness of the inner surface of each tube sample were visually checked.

### Surface Smoothness (for Examples 33 to 42) :

Pellets of a resin composition to be tested were put into a melt indexer (Type C-5059D2-1, manufactured by Toyo Seiki Co., having an orifice diameter of 0.0825 inches and an orifice length of 0.315 inches), kept therein at a temperature higher than the melting point of the thermoplastic resin in the resin composition by 60°C for 5 minutes, and then extruded out therethrough under a load of 5 kg into a gut. This operation was effected 10 times to obtain 10 guts. These guts were projected, using a projector (Profile Projector, V-12, manufactured by Nikon Co.), and the number of the projections having a height of 25 µm or larger that existed in the surface of each gut was counted. The length of each gut was 5 cm, and all 10 guts, totaling 50 cm, were checked in that manner to count the number of the projections. The data were averaged to obtain the number of the projections per cm of the guts. Melt Viscosity (for Examples 33 to 42);

Using a flow tester, pellets of a resin composition were tested at 270°C and at a shear rate of 1000/sec to measure the melt viscosity of the composition.

### Kink Resistance:

A tube sample was wound around a plurality of cylinders each having a different radius, R mm, whereupon the smallest radius, R mm, of one cylinder, around which the tube sample was wound without being bent in such a manner that the minor diameter of the thus-wound tube was not smaller than 50 % of the diameter of the original tube, was measured. The thus-measured value, R mm indicates the kink resistance of the tube sample. The smaller the thus-measured value, R mm, is, the better flexibility the tube sample has.

### Low-temperature Stiffness of Tubes:

Ten tube samples each having a length of 30 cm were kept in a cooling device at -40 °C for 4 hours. Then, the tube samples were taken out of the cooling device, and a ball weighing 0.454 kg was dropped down onto each tube sample at a height of 304.8 mm, whereupon the tube sample was checked as to whether or not it was broken.

### Preparation Example 1: Polymerization of PPS Resins

Sodium sulfide 9-hydrate (6.005 kg, 25 mols), sodium acetate (0.205 kg, 2.5 mols) and N-methyl-2-pyrrolidone (hereinafter referred to as NMP) (5 kg) were put into an autoclave equipped with a stirrer, and gradually heated up to 205°C with introducing nitrogen into the autoclave and with removing water (3.6 liters) therefrom through distillation. Next, the autoclave was cooled to 180°C, into which were put 1,4-dichlorobenzene (3.719 kg, 25.3 mols) and NMP (3.7 kg). Then, this was sealed in nitrogen and heated up to 270°C, and the compounds therein were reacted at 270°C for 2.5 hours. After having been cooled, the reaction product was washed 5 times with lukewarm water, and then dried at 80°C under reduced pressure for 24 hours to obtain 2.45 kg of PPS (P-1).

The reaction product as prepared through the same polymerization as above was put into an autoclave equipped with a stirrer, along with 15 liters of ion-exchanged water and 13 ml of glacial acetic acid. Then, the autoclave was sealed in nitrogen, then heated up to 190°C, and thereafter cooled to 70 °C. The thus-obtained slurry was filtered through centrifugation, and the resulting residue was washed with ion-exchanged water at 80°C, and thereafter dried in vacuum to obtain PPS (P-2).

The reaction product as prepared through the same polymerization as above was washed 5 times with lukewarm water, then heated at 100°C, put into NMP (10 kg), stirred for about 1 hour, and then filtered out. The resulting residue was washed several times with hot water. Next, this was put into an aqueous solution of acetic acid (pH 4) (25 liters), which was hot at 90°C, and stirred for about 1 hour. After having been taken out of the solution through filtration, this was washed with ion-exchange water which was at about 90°C, until the wash waste came to have a pH of 7. Next, this was dried under reduced pressure at 80°C for 24 hours to obtain PPS (P-3). This PPS has a number-average molecular weight of 9,200 and a total wash content of 0.07 % by weight.

Components used in the following Examples and Comparative Examples are as follows:

### (G) Electroconductive filler and/or electroconductive polymer:

G-1: Carbon black (EC600JD, manufactured by Ketzen Black International Co.), having a DPB absorption of 495 ml/100 g, a specific surface area (as measured by a BET method) of 1270 m²/g, a mean grain size of 30 nm, and an ash content of 0.2 %.
G-2: Carbon black (Mitsubishi Electroconductive Carbon Black #3050, manufactured by Mitsubishi Chemical Co.), having a DPB absorption of 180 ml/100 g, a specific surface area (as measured by a BET method) of 75 m²/g, and an ash content of 0.2 %.
G-3: Flaky zinc powder, having a mean grain size of 1 mm.
G-4: Pitch carbon fiber, having a fiber diameter of 13 µm and a fiber length of 3 mm.

### (B) Functional group-having thermoplastic resin:

B-1: Olefinic copolymer consisting essentially of an α-olefin and glycidyl ester of an α,β-unsaturated acid:
   Ethylene/glycidyl methacrylate (88/12, % by weight) copolymer.
B-2: Graft copolymer having a main skeleton of ethylene/glycidyl methacrylate (E/GMA = 85/15, % by weight) and grafted with acrylonitrile/styrene (AS = 30/70, % by weight), (E/GMA)/(AS) = 70/30 (% by weight).
B-3: Olefinic copolymer consisting essentially of an α-olefin and a glycidyl ester of an α,β-unsaturated acid:
   Ethylene/glycidyl methacrylate (94/6, % by weight) copolymer.
B-4: Maleic anhydride (0.5 wt.%)-modified ethylene-propylene rubber.
B-5: Maleic anhydride (0.5 wt.%) graft-modified ethylene-butene copolymer.

### (C) Elastomer having none of epoxy groups, acid anhydride groups, carboxyl group and its salts and carboxylate groups:

C-1: Ethylene/butene-1 (82/18, % by weight) copolymer.
C-2: Ethylene/ethyl acrylate (85/15, % by weight) copolymer.
C-3: Ethylene/propylene copolymer.

### (D) Thermoplastic resin consisting essentially of repeating units as bonded together via at least one bonding mode selected from amido bonds, ester bonds and urethane bonds:

D-1: Nylon 11 ("RILSAN" BESN O TL, manufactured by Toray Co.).
D-2: Nylon 12 ("RILSAN" AESN O TL, manufactured by Toray Co.).
D-3: ("AMILAN" CM1046X04, manufactured by Toray Co.).
D-4: Polybutylene terephthalate (PBT 1400S, manufactured by Toray Co.)
D-5: Polyurethane resin (ELASTOLLAN)
D-6: Nylon 11("RILSAN" BESNO 20, manufactured by Toray Co.)

### (F) Thermoplastic Resin:

F-1: Pellets of nylon 12 (having a relative viscosity of 2.2).
F-2: Pellets of nylon 12 (having a relative viscosity of 1.4).
F-3: Powder of nylon 12 (having a relative viscosity of 1.4). This has a weight-average grain size of 0.8 mm.
F-4: Powder of nylon 12 (having a relative viscosity of 2.2). This has a weight-average grain size of 0.8 mm.
   The relative viscosity of these polymers was measured in meta-cresol (having a polymer concentration of 0.5 % by weight), at 25°C. The weight-average grain size of these polymer powders was measured through centrifugal precipitation.
F-5: Pellets of nylon 6 (having a relative viscosity of 2.4).
The relative viscosity of the polymer was measured in 98 % concentrated sulfuric acid solution (containing 1 g of polymer in 100 ml of concentrated sulfuric acid) at 25°C.
F-6: Polybutylene terephthalate (having a relative viscosity of 2.0).
   The relative viscosity of the polymer was measured in 0.5 % ortho-chlorophenol solution at 25°C.

Thermoplastic resin except polyphenylene sulfide resins, for the layer (b):
b-1: Nylon 11 ("RILSAN" BESN BK P20TL, manufactured by Toray Co.), having a Young's modulus of 5,000.
b-2: Nylon 12 ("RILSAN" AESN BK P20TL, manufactured by Toray Co.), having a Young's modulus of 5,000.
b-3: Polybutylene terephthalate (PBT 1404X04,
manufactured by Toray Co.), having a Young's modulus of 15,000.
b-4: Polyurethane resin ("ELASTOLLAN" E598PNAT), having a Young's modulus of 3,000.
b-5: Polyolefin resin ("Hi-Zex" 3000B,
manufactured by Mitsui Petro-chemical Co.), having a Young's modulus of 10,000.
b-6: Nylon 6 ("AMILLAN" CM1056, manufactured by Toray Co.).

### (E) Alkoxysilane compound:

E - 1 : β - ( 3 , 4-epoxycyclohexyl)ethyltrimethoxysilane

### Resin composition for layer (e):

(e-1): Composition comprised of 55 % by weight of polyphenylene sulfide (having a melt viscosity of 900 poises at 310°C and at a shear rate of 1000/sec), 20 % by weight of Nylon 12 (this is the same as A-1 mentioned above), and 25 % by weight of functional group-having thermoplastic resin (this is the same as C-2 mentioned above).
(e-2): Nylon 12 ("RILSAN" AESN O TL, manufactured by Toray Co.).

### Examples 1 to 15, and Comparative Examples 1 to 3:

The constituent components shown in Tables 1 to 3 were dry-blended in the ratio also shown in Tables 1 to 3, then pre-mixed for 2 minutes in a tumbler, and thereafter melt-kneaded through a double-screw extruder of which the temperature of the cylinder fell between 300 and 320°C. The resulting melt was pelletized, using a strand cutter, and then dried overnight at 120°C. The pellets were molded into moldings, of which the volume resistivity and the mechanical strength were measured.

On the other hand, two-layered tubes were molded, of which the inner layer was made from the pelletized PPS resin as hereinabove and the outer layer was from the thermoplastic resin composition as in Tables 1 to 3.

For the molding of those tubes, used were two extruders. The resins as extruded out through the two extruders were collected, using an adapter. Also used were a die through which the thus-collected resins were molded into two-layered tubes, a sizing die for cooling the tubes with controlling their size, and a take-up device.

The two-layered tubes each had an outer diameter of 8 mm, an inner diameter of 6 mm, an outer layer thickness of 0.9 mn and an inner layer thickness of 0.1 mm. The two-layered tubes were tested, and the data obtained are shown in Tables 1 to 3.

Examples 1 to 15 are included for information only; they do not concern hollow moldings having three or more layers as defined in the accompanying claim 1.

**Table 1**

| Components | | Examples | | | | | | | |
|---|---|---|---|---|---|---|---|---|---|
| | | 1 | 2 | 3 | 4 | 5 | 6 | 7 | 8 |
| | | b-3 | b-3 | b-3 | b-1 | b-1 | b-1 | b-1 | b-1 |
| Outer layer | (b) Thermoplastic resin | 100 | 100 | 100 | 100 | 100 | 100 | 100 | 100 |
| Inner Layer | | P-3 | P-3 | P-3 | P-3 | P-3 | P-3 | P-1 | P-3 |
| | (A) PPS | 100 | 100 | 100 | 100 | 100 | 100 | 100 | 100 |
| | (G) Electroconductive material | G-1 | G-1 | G-1 | G-1 | G-1 | G-1 | G-1 | G-1 |
| | | 5 | 8.8 | 10 | 7.5 | 10 | 10 | 10 | 10 |
| | (B) Functional group-having thermoplastic resin | | B-1 | B-1 | | B-1 | B-1 | B-1 | B-1 |
| | | | 75 | 50 | | 50 | 10 | 10 | 10 |
| | (C) Elastomer with no functional group | | | | | | C-1 | C-1 | C-1 |
| | | | | | | | 40 | 40 | 40 |
| | | | | D-4 | D-1 | D-1 | D-1 | D-1 | D-3 |
| | (D) Thermoplastic resin | | | 50 | 50 | 50 | 50 | 50 | 50 |
| Interlayer adhesion strenght (kg/10 mm) | | 0.1 | 1.5 | 3.5 | 1.5 | 3.2 | 4.1 | 3.5 | 3.2 |
| Alcohol-gasoline permeation resistance (g·mm/m²·day) | | 0.5 | 0.8 | 1.0 | 1.0 | 1.3 | 1.2 | 1.2 | 1.2 |
| Inner surface smoothness | | A | A | A | A | B | A | B | A |
| Volume resistivity of inner layer composition (Ω cm) | | 5 x 10² | 7 x 10² | 7 x 10² | 8 x 10² | 8 x 10² | 7 x 10² | 7 x 10² | 7 x 10² |
| Notched Izod impact strength of inner layer composition (J/M) | | 8 | 25 | 32 | 12 | 30 | 45 | 28 | 41 |

| | | | | | | | | | |
|---|---|---|---|---|---|---|---|---|---|
| For each component, the upper part indicates the compound while the lower part indicates its amount: (wt.pts.). | | | | | | | | | |

**Table 2**

| Components (wt.pts.) | | Examples | | | | | Comparative Examples | | |
|---|---|---|---|---|---|---|---|---|---|
| | | 9 | 10 | 11 | 12 | 13 | 1 | 2 | 3 |
| Outer layer | (b) Thermoplastic resin | b-2 | b-2 | b-5 | b-4 | b-1 | b-3 | b-1 | b-2 |
| | | 100 | 100 | 100 | 100 | 100 | 100 | 100 | 100 |
| Inner Layer | (A) PPS | P-2 | P-3 | P-3 | P-3 | P-3 | P-3 | | |
| | | 100 | 100 | 100 | 100 | 100 | 100 | | |
| | (G) Electroconductive material | G-1 | G-2 | G-3 | G-2 | G-1 | | | |
| | | 10 | 10 | 50 | 50 | 10 | | | |
| | | | B-4 | | | | | | |
| | | | 20 | | | | | | |
| | (B) Functional group-having thermoplastic resin | B-2 | B-2 | B-2 | B-2 | B-1 | | | |
| | | 10 | 25 | 15 | 10 | 10 | | | |
| | | | | B-4 | | | | | |
| | | | | 10 | | | | | |
| | (C) Elastomer with no functional group | C-1 | C-1 | C-1 | C-2 | C-1 | | | |
| | | 40 | 50 | 30 | 40 | 40 | | | |
| | (D) Thermoplastic resin | D-2 | D-2 | | D-5 | D-1 | | | |
| | | 50 | 50 | | 50 | 50 | | | |
| | (E) Alkoxysilane Compound | | | | | E-1 | | | |
| | | | | | | 0.7 | | | |
| Interlayer adhesion strength (kg/10 mm) | | 4.1 | 4.2 | 1.5 | 3.2 | 4.4 | 0.0 | - | - |
| Alcohol-gasoline permeation resistance (g·mm/m²·day) | | 1.0 | 5.2 | 1.8 | 1.2 | 1.2 | 0.5 | 150 | 180 |
| Inner surface smoothness | | A | B | A | A | A | B | A | A |
| Volume resistivity of Inner layer composition (Ω. cm) | | 4 x 10² | 5 x 10⁴ | 9 x 10² | 4 x 10⁵ | 6 x 10² | 10¹⁶ | - | - |
| Notched Izod impact strength of inner layer composition (J/M) | | 41 | 40 | 25 | 25 | 53 | 12 | | |

| | | | | | | | | | |
|---|---|---|---|---|---|---|---|---|---|
| For each component, the upper part indicates the compound while the lower part indicates its amount (wt.pts.). | | | | | | | | | |

**Table 3**

| Components | | Examples | |
|---|---|---|---|
| | | 14 | 15 |
| Outer layer | (b) Thermoplastic resin | b-3 | b-3 |
| | | 100 | 100 |
| | (A) PPS | P-3 | P-3 |
| Inner Layer | | 100 | 100 |
| | (G) Electroconductive material | G-1 | G-1 |
| | | 7.5 | 7.5 |
| | (B) Functional group-having thermoplastic resin | B-1/B-5 | B-1/B-4 |
| | | 8.3/17.3 | 13.3/26.7 |
| | (C) Elastomer with no functional group | C-1 | C-3 |
| | | 17.3 | 26.7 |
| | (D) Thermoplastic resin | | |
| Interlayer adhesion strength (kg/10 mm) | | 1.6 | 1.6 |
| Alcohol-gasoline permeation resistance (g·mm/m²·day) | | 0.8 | 0.8 |
| Inner surface smoothness | | A | A |
| Volume resistivity of inner layer composition (Ω cm) | | 7 x 10² | 7 x 10² |
| Notched Izod impact strength of inner layer composition (J/M) | | 180 | 210 |

| | | | |
|---|---|---|---|
| For each component, the upper part indicates the compound while the lower part indicates its amount (wt.pts.). | | | |

As is understood from the comparison between the data of Comparative Examples 2 and 3 and those of Example 1, the tubes having an inner layer of an electroconductive PPS composition have higher electroconductivity and higher alcohol-gasoline permeation resistance.

In Comparative Example 1, no electroconductive filler was used. The tube samples of Comparative Example 1 have a high volume resistivity, and the walls of those tube samples were much roughened to have poor inner surface smoothness.

As is understood from the comparison between the data of Example 1 and those of Example 2, and from the comparison between the data of Example 4 and those of Example 5, the addition of the functional group-having thermoplastic resin (B) to the resin composition is effective in improving the impact strength of the moldings and also in improving the interlayer adhesion of the moldings.

As is understood from the comparison between the data of Example 5 and those of Example 6, the addition of the elastomer (C) having none of epoxy groups, acid anhydride groups, carboxyl group and its salts and carboxylate groups to the resin composition is effective in improving the interlayer adhesion, the inner surface smoothness and the impact strength of the moldings.

As is understood from the comparison between the data of Example 2 and those of Example 3, and from the comparison between the data of Example 1 and those of Example 4, the addition of the thermoplastic resin (D) consisting essentially of repeating units as bonded together via at least one bonding mode selected from amido bonds, ester bonds and urethane bonds to the resin composition is effective in improving the interlayer adhesion of the moldings. As is understood from the comparison between the data of Example 6 and those of Example 8, the thermoplastic resin except PPS resins for the layer (b) is preferably the same as the thermoplastic resin (D) consisting essentially of repeating units as bonded together via at least one bonding mode selected from amido bonds, ester bonds and urethane bonds with respect to the repeating units constituting them, as ensuring higher interlayer adhesion of the moldings.

As is understood from the comparison between the data of Example 6 and those of Example 7, the use of the deionized PPS is effective in producing the moldings having higher impact strength and higher interlayer adhesion strength and having better inner surface smoothness.

As is understood from the comparison between the data of Example 6 and those of Example 13, the addition of the alkoxysilane compound (E) to the resin composition is effective not only in improving the impact resistance of the moldings but also in improving the interlayer adhesion thereof.

### Preparation Example 2: Preparation of Composition for Layer (a)

The constituent components shown in Table 4 were dry-blended in the ratio also shown in Table 4, then pre-mixed for 2 minutes in a tumbler, and thereafter melt-kneaded through a single-screw extruder (screw: DULMAGE), of which the temperature of the cylinder fell between 300 and 320°C.

The resulting melt was pelletized, using a strand cutter, and then dried overnight at 120°C.

### Preparation Example 3: Preparation of Composition for Layer (c)

The constituent components shown in Table 5 were dry-blended in the ratio also shown in Table 5, then pre-mixed for 2 minutes in a tumbler, and thereafter melt-kneaded through a double-screw extruder of which the temperature of the cylinder was higher than the melting point of the thermoplastic resin being melt-kneaded by from 30 to 50°C. The resulting melt was pelletized, using a strand cutter, and then dried overnight at a temperature falling between 80 and 120°C. The pellets were molded into moldings, of which the volume resistivity was measured.

### Examples 16 to 34, and Comparative Example 4:

The pellets of the resin compositions prepared above were molded into three-layered tubes. Examples 16 to 29 and 31 to 34 illustrate the invention of the accompanying claim 1.

For the molding of those tubes, used were three extruders. The resins as extruded out through the three extruders were collected, using an adapter. Also used were a die through which the thus-collected resins were molded into three-layered tubes, a sizing die for cooling the tubes with controlling their size, and a take-up device.

The three-layered tubes each had an outer diameter of 8 mm, an inner diameter of 6 mm, an outer layer thickness of 0.75 mm, an interlayer thickness of 0.15 mm and an inner layer thickness of 0.1 mm. The three-layered tubes were tested, and the data obtained are shown in Tables 6 and 7.

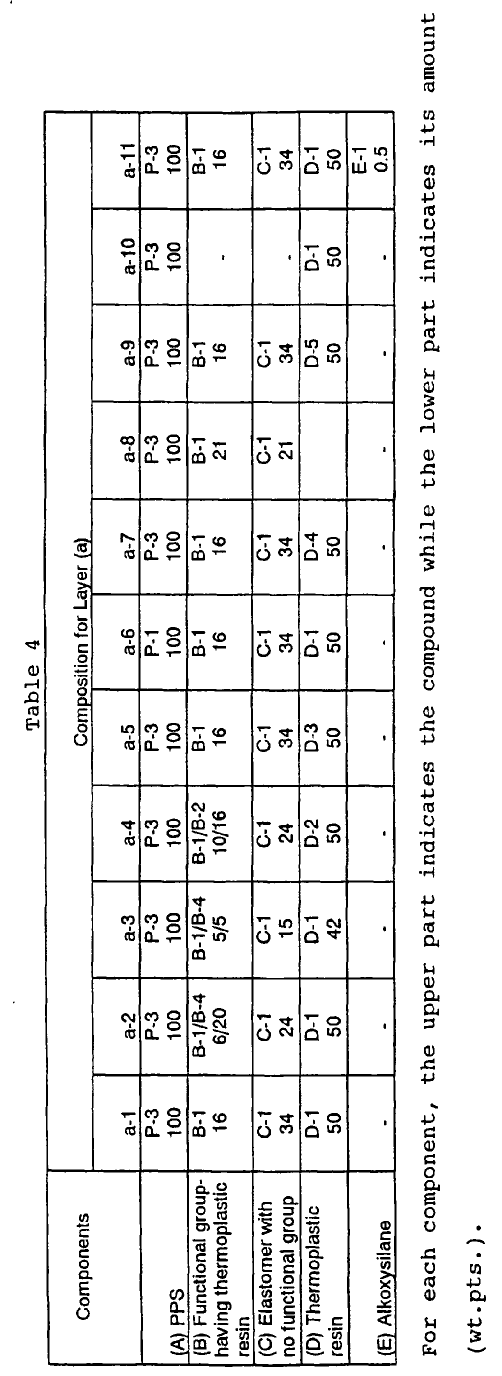

**Table 5**

| Components | Composition for Layer (c) | | | | | | | | |
|---|---|---|---|---|---|---|---|---|---|
| | c-1 | c-2 | c-3 | c-4 | c-5 | c-6 | c-7 | c-8 | c-9 |
| | D-1 | D-2 | D-1 | D-4 | D-5 | D-6 | P-3 | P-3 | P-3 |
| (F) Thermoplastic resin | 100 | 100 | 100 | 100 | 100 | 100 | 100 | 100 | 100 |
| (B) Functional group-having elastomer | B-4 | | B-4 | B-1 | B-1 | B-4 | B-1/B-5 | B-1/B-4 | B-1 |
| | 8 | - | 5 | 8 | 8 | 8 | 8.3/17.3 | 13.3/26.7 | 25.6 |
| (C) Elastomer with no functional group | | | C-3 | | | | C-1 | C-3 | C-1 |
| | - | - | 5 | - | - | - | 17.3 | 26.7 | 17.3 |
| (G) Electroconductive material(*) | G-1 | G-1 | G-1 | G-2 | G-1 | G-1 | G-1 | G-1 | G-1 |
| | 6.4 | 6.4 | 8.7 | 45 | 6.7 | 6.7 | 5.3 | 5.3 | 5.3 |
| Volume resistivity (Ωcm) | 4 x 10³ | 5 x 10³ | 9 x 10² | 4 x 10⁵ | 6 x 10³ | 6 x 10⁴ | 4 x 10² | 6 x 10² | 6 x 10² |

| | | | | | | | | | |
|---|---|---|---|---|---|---|---|---|---|
| For each component, the upper part indicates the compound while the lower part indicates its amount (wt. pts.). | | | | | | | | | |
| (*): The amount is in terms of parts by weight relative to the total amount of the thermoplastic resin and the elastomer(s) of being 100 parts by weight. | | | | | | | | | |

**Table 6**

| Components | Examples | | | | | | | |
|---|---|---|---|---|---|---|---|---|
| | 16 | 17 | 18 | 19 | 20 | 21 | 22 | 23 |
| Outerlayer | b-1 | b-1 | b-1 | b-1 | b-1 | b-2 | b-1 | b-6 |
| Interlayer | a-1 | a-2 | a-3 | a-2 | a-1 | a-4 | a-6 | a-5 |
| Inner layer | c-1 | c-1 | c-1 | c-2 | c-4 | c-1 | c-1 | c-6 |
| Outer layer/interlayer adhesion strength (kg/10 mm) | 3.2 | 3.8 | 2.8 | 3.8 | 3.2 | 3.2 | 2.0 | 2.0 |
| Inner layer/interlayer adhesion strength (kg/10 mm) | 4.1 | 4.5 | 3.1 | 4.5 | 4.1 | 1.5 | 2.0 | 1.9 |
| Alcohol-gasoline permeation resistance (g·mm/m²·day) | 1.8 | 1.0 | 0.7 | 1.4 | 1.4 | 5.2 | 2.9 | 7.4 |
| Kink resistance (R, mm) | 25 | 20 | 25 | 35 | 35 | 30 | 30 | 35 |

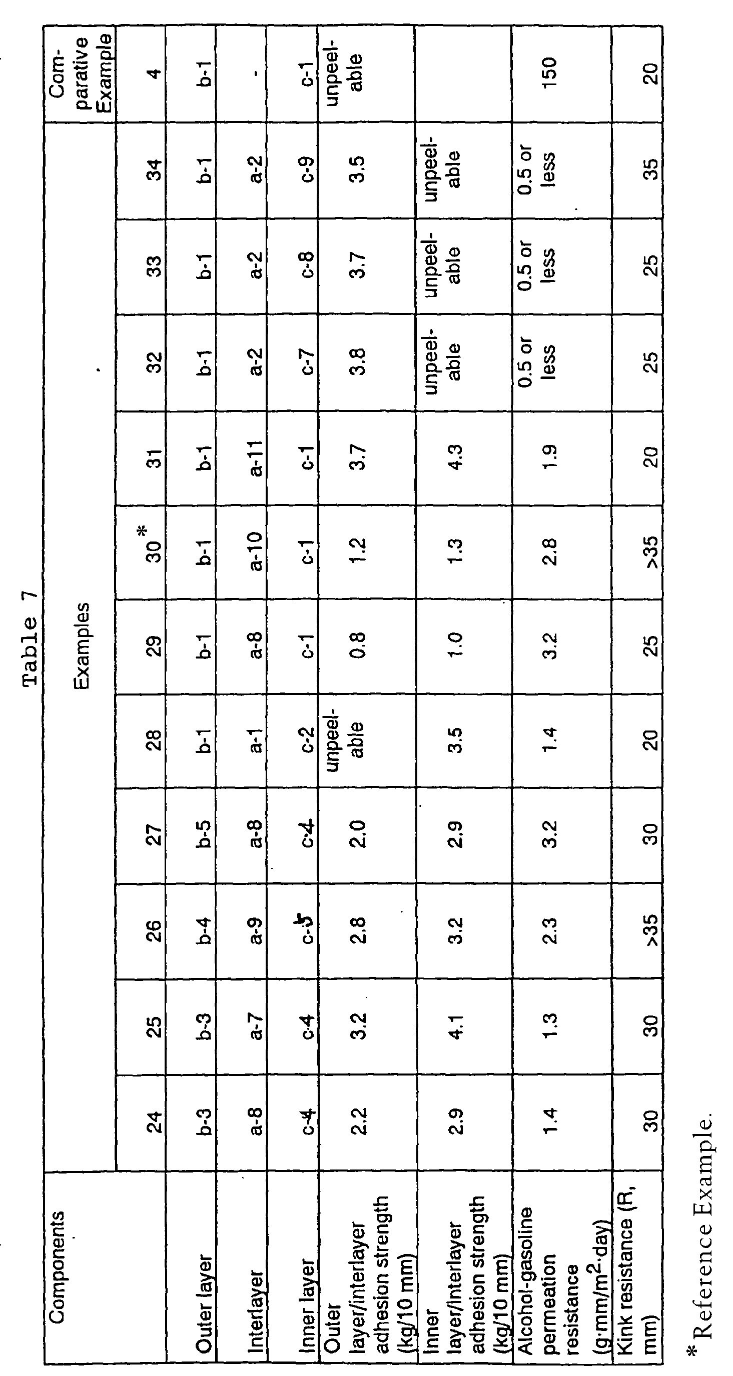

As is understood from the comparison between the data of Comparative Example 4 and those of Examples, the tube moldings satisfying the constitution of the invention have good alcohol-gasoline permeation resistance. As not having any PPS composition layer, the tube moldings of Comparative Example 1 have poor alcohol-gasoline permeation resistance.

From the data of Examples 24. and 27, it is known that the tube moldings of which the outer layer contained PBT and the inner layer contained polyethylene have relatively good interlayer adhesion even though the thermoplastic resin (D) was not added to those layers. However, as is known from Examples 14 and 27 in which both the outer layer and the inner layer constituting the tube moldings contained nylon 11, the addition of the thermoplastic resin (D) to the layers greatly improves the interlayer adhesion of the moldings.

In addition, as is further known from Examples 16 and 21, the interlayer adhesion between the interlayer and the inner layer adjacent thereto is higher when those two adjacent layers contain nylon of the same kind.

As is known from Example 16, the components (B) and (C) in the layer (a) contribute the improvement in the interlayer adhesion of the tube moldings.

As is known from Examples 16 and 23, nylon 6 is preferred to nylon 11 and nylon 12 as the polyamide resin to be in the layer (b), since the former is more effective than the latter two in improving the kink resistance, the interlayer adhesion and the alcohol-gasoline permeation resistance of the tube moldings.

As is understood from the comparison between the data of Example 16 and those of Example 22, the use of the deionized PPS is effective in much improving the kink resistance and the interlayer adhesion of the tube moldings.

## Claims

1. An electroconductive, multilayered hollow molding comprising at least three or more thermoplastic resin layers, in which at least one layer is an interlayer layer (a) of a polyphenylene sulfide resin composition which comprises (A) 100 parts by weight of a polyphenylene sulfide resin and (B) from 1 to 200 parts by weight of an olefinic copolymer containing at least one functional group selected from epoxy groups, acid anhydride groups, carboxyl group and its salts, and carboxylate groups;
at least one layer is an outer layer (b) of a thermoplastic resin except polyphenylene sulfide resins or a thermoplastic resin composition consisting essentially of a thermoplastic resin except polyphenylene sulfide resins; and
at least one layer is an inner layer (c) of an electroconductive, thermoplastic resin composition indispensably comprising an electroconductive filler and/or an electroconductive polymer.

2. An electroconductive, multilayered hollow molding as claimed in claim 1, which is composed of three layers, an interlayer (a) of a polyphenylene sulfide resin composition, an outermost layer (b) of a thermoplastic resin except polyphenylene sulfide resins or a thermoplastic resin composition consisting essentially of a thermoplastic resin except polyphenylene sulfide resins, and an innermost layer (c) of an electroconductive, thermoplastic resin composition indispensably comprising an electroconductive filler and/or an electroconductive polymer.

3. An electroconductive, multilayered hollow molding as claimed in claims 1 or 2, in which the thermoplastic resin except polyphenylene sulfide resins that constitutes the layer (b) is at least one selected from polyamide resins, thermoplastic polyester resins, thermoplastic polyurethane resins and polyolefin resins.

4. An electroconductive, multilayered hollow molding as claimed in any one of claims 1 to 3, in which the thermoplastic resin except polyphenylene sulfide resins or the thermoplastic resin composition consisting essentially of a thermoplastic resin except polyphenylene sulfide resins that constitutes the layer (b) has a Young's modulus of not larger than 18,000 kg/cm².

5. An electroconductive, multilayered hollow molding as claimed in any one of claims 1 to 4, in which the resin that constitutes the layer (b) is a polyamide resin comprising constitutional amido units each having from 8 to 15 carbon atoms per one amido group.

6. An electroconductive, multilayered hollow molding as claimed in any one of claims 1 to 5, in which the functional group-having olefinic copolymer (B) to be in the polyphenylene sulfide resin composition that constitutes the layer (a) is an epoxy group-having olefinic copolymer (B1) consisting essentially of an α-olefin and a glycidyl ester of an α,β-unsaturated acid.

7. An electroconductive, multilayered hollow molding as claimed in claim 6, in which the epoxy group-having olefinic copolymer (B1) to be in the polyphenylene sulfide resin composition that constitutes the layer (a) is an olefinic copolymer indispensably comprising (1) an α-olefin, (2) a glycidyl ester of an α,β-unsaturated acid, and (3) a monomer to be represented by the following general formula: 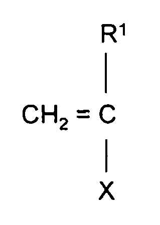 wherein R¹ represents a hydrogen atom or a lower alkyl group; X represents a group selected from -COOR², -CN and aromatic groups; and R² represents an alkyl group having from 1 to 10 carbon atoms.

8. An electroconductive, multilayered hollow molding as claimed in any one of claims 1 to 7, in which the polyphenylene sulfide resin composition that constitutes the layer (a) indispensably comprises at least two, functional group-having olefinic copolymers (B) of (B1) an epoxy group-having olefinic copolymer and (B2) an acid anhydride group-having olefinic copolymer, and in which the ratio in terms of % by weight of (B1) to (B2), (B1)/(B2), falls between 1/99 and 99/1 with the total of (B1) and (B2) being 100% by weight.

9. An electroconductive, multilayered hollow molding as claimed in any one of claims 1 to 8, in which the polyphenylene sulfide resin composition that constitutes the layer (a) further contains (C) from 1 to 200 parts by weight, relative to 100 parts by weight of the polyphenylene sulfide resin (A), of an elastomer having none of epoxy groups, acid anhydride groups, carboxyl group and its salts, and carboxylate groups, with the total of the functional group-having olefinic copolymer (B) and the elastomer (C) being not larger than 200 parts by weight relative to 100 parts by weight of the polyphenylene sulfide resin (A).

10. An electroconductive, multilayered hollow molding as claimed in any one of claims 1 to 9, in which the polyphenylene sulfide resin composition that constitutes the layer (a) further contains (D) from 5 to 200 parts by weight, relative to 100 parts by weight of the polyphenylene sulfide resin (A), of a thermoplastic resin consisting essentially of repeating units as bonded together via at least one bonding mode selected from amido bonds, ester bonds and urethane bonds.

11. An electroconductive, multilayered hollow molding as claimed in claim 10, in which the thermoplastic resin (D) is a polyamide resin.

12. An electroconductive, multilayered hollow molding as claimed in any one of claims 1 to 11, in which the polyphenylene sulfide resin composition that constitutes the layer (a) further contains (E) from 0.05 to 5 parts by weight, relative to 100 parts by weight of the polyphenylene sulfide resin (A), of an alkoxysilane compound having at least one functional group selected from epoxy groups, amino groups, isocyanato groups, hydroxyl groups, mercapto groups and ureido groups.

13. An electroconductive, multilayered hollow molding as claimed in any one of claims 1 to 12, in which the polyphenylene sulfide resin (A) to be in the polyphenylene sulfide resin composition that constitutes the layer (a) is a de-ionized one.

14. An electroconductive, multilayered hollow molding as claimed in any one of claims 1 to 13, in which the electroconductive, thermoplastic resin composition that constitutes the layer (c) comprises 100 parts by weight of a resin composition comprising (F) from 0 to 98% by weight of a thermoplastic resin, (B) from 2 to 60% by weight of an olefinic copolymer having at least one functional group selected from epoxy groups, acid anhydride groups, carboxyl group and its salts, and carboxylate groups and (C) from 0 to 58% by weight of an elastomer having none of epoxy groups, acid anhydride groups, carboxyl group and its salts, and carboxylate groups, and (G) from 1 to 100 parts by weight of an electroconductive filler or an electroconductive polymer.

15. An electroconductive, multilayered hollow molding as claimed in any claim 14, in which the electroconductive filler or polymer (G) to be in the electroconductive, thermoplastic resin composition that constitutes the layer (c) is either a non-fibrous one or a fibrous one having a ratio, length/diameter, of not larger than 200.

16. An electroconductive, multilayered hollow molding as claimed in claim 14 or 15, in which the electroconductive filler (G) to be in the electroconductive, thermoplastic resin composition that constitutes the layer (c) is carbon black.

17. An electroconductive, multilayered hollow molding as claimed in claim 16, in which the electroconductive filler (G) to be in the electroconductive, thermoplastic resin composition that constitutes the layer (c) is carbon black having a specific surface area (as measured in a BET method) of not smaller than 500 m²/g.

18. An electroconductive, multilayered hollow molding as claimed in any one of claims 14 to 17 in which the thermoplastic resin (F) to be in the electroconductive, thermoplastic resin composition that constitutes the layer (c) is at least one selected from polyphenylene sulfides, polyamide resins, and thermoplastic polyester resins.

19. An electroconductive, multilayered hollow molding as claimed in any one of claims 14 to 18, in which the thermoplastic resin (F) to be in the resin composition for the layer (c) is a polyphenylene sulfide resin, and the electroconductive, thermoplastic resin composition that constitutes the layer (c) is a polyphenylene sulfide resin composition indispensably comprising at least two, functional group-having olefinic copolymers (B) of (B1) an epoxy group-having olefinic copolymer and (B2) an acid anhydride group-having olefinic copolymer with the ratio in terms of % by weight of (B1) to (B2), (B1)/(B2), falling between 1/99 and 99/1 and with the total of (B1) and (B2) being 100% by weight.

20. An electroconductive, multilayered hollow molding as claimed in any one of claims 1 to 19, in which the electroconductive, thermoplastic resin composition that constitutes the electroconductive layer has a volume resistivity of not larger than 10¹⁰ Ω cm.

21. An electroconductive, multilayered hollow molding as claimed in any one of claims 1 to 20, in which the electroconductive, thermoplastic resin composition that constitutes the electroconductive layer has a volume resistivity of larger than 100 Ω cm but not larger than 10¹⁰ Ω cm.

22. An electroconductive, multilayered hollow molding as claimed in any one of claims 1 to 21, which has a total thickness falling between 0.2 mm and 3 mm and of which the thickness of the electroconductive layer falls between 1% and 50% of the total thickness of the molding.

23. Use of an electroconductive multilayered hollow molding as claimed in any one of claims 1 to 22 as a fuel tube.

## Patentansprüche

1. Elektrisch leitendes, mehrschichtiges hohles Formteil, das zumindest drei oder mehr thermoplastische Harzschichten umfasst, worin zumindest eine Schicht eine Zwischenschicht (a) einer Polyphenylensulfidharzzusammensetzung ist, die (A) 100 Gewichtsteile eines Polyphenylensulfidharzes und (B) 1 bis 200 Gewichtsteile eines Olefin-Copolymers umfasst, das zumindest eine aus Epoxygruppen, Säureanhydridgruppen, Carboxylgruppen und deren Salzen sowie Carboxylatgruppen ausgewählte funktionelle Gruppe aufweist,
zumindest eine Schicht eine Außenschicht (b) eines thermoplastischen Harzes, mit der Ausnahme von Polyphenylensulfidharzen, oder einer thermoplastischen Harzzusammensetzung ist, die im Wesentlichen aus einem thermoplastischen Harz, mit der Ausnahme von Polyphenylensulfidharzen, besteht, und
zumindest eine Schicht eine Innenschicht (c) einer elektrisch leitenden thermoplastischen Harzzusammensetzung ist, die unbedingt einen elektrisch leitenden Füllstoff und/oder ein elektrisch leitendes Polymer aufweisen muss.

2. Elektrisch leitendes, mehrschichtiges hohles Formteil nach Anspruch 1, das aus drei Schichten besteht, nämlich einer Zwischenschicht (a) einer Polyphenylensulfidharzzusammensetzung, einer äußersten Schicht (b) eines thermoplastischen Harzes mit der Ausnahme von Polyphenylensulfidharzen oder einer thermoplastischen Harzzusammensetzung, die im Wesentlichen aus einem thermoplastischen Harz, mit der Ausnahme von Polyphenylensulfidharzen, besteht, und einer innersten Schicht (c) einer elektrisch leitenden thermoplastischen Harzzusammensetzung, die unbedingt einen elektrisch leitenden Füllstoff und/oder ein elektrisch leitendes Polymer aufweisen muss.

3. Elektrisch leitendes, mehrschichtiges hohles Formteil nach Anspruch 1 oder 2, worin das thermoplastische Harz, mit der Ausnahme von Polyphenylensulfidharzen, aus dem die Schicht (b) besteht, zumindest eines ist, das aus Polyamidharzen, thermoplastischen Polyesterharzen, thermoplastischen Polyurethanharzen und Polyolefinharzen ausgewählt ist.

4. Elektrisch leitendes, mehrschichtiges hohles Formteil nach einem der Ansprüche 1 bis 3, worin das thermoplastische Harz, mit der Ausnahme von Polyphenylensulfidharzen, oder die thermoplastische Harzzusammensetzung, die im Wesentlichen aus einem thermoplastischen Harz, mit der Ausnahme von Polyphenylensulfidharzen, besteht, das/die die Schicht (b) bildet, einen Youngschen Elastizitätsmodul von nicht mehr als 18.000 kg/cm² aufweist.

5. Elektrisch leitendes, mehrschichtiges hohles Formteil nach einem der Ansprüche 1 bis 4, worin das Harz, das die Schicht (b) bildet, ein Polyamidharz ist, das Amidobausteineinheiten umfasst, die jeweils 8 bis 15 Kohlenstoffatome pro Amidogruppe aufweisen.

6. Elektrisch leitendes, mehrschichtiges hohles Formteil nach einem der Ansprüche 1 bis 5, worin das funktionelle Gruppen aufweisende Olefin-Copolymer (B), das in der Schicht (a) bildenden Polyphenylensulfidharzzusammensetzung vorliegen soll, ein Epoxygruppen-hältiges Olefin-Copolymer (B1) ist, das im Wesentlichen aus einem α-Olefin und einem Glycidylester einer α,β-ungesättigten Säure besteht.

7. Elektrisch leitendes, mehrschichtiges hohles Formteil nach Anspruch 6, worin das Epoxygruppen-hältige Olefin-Copolymer (B1), das in der Schicht (a) bildenden Polyphenylensulfidharzzusammensetzung vorliegen soll, ein Olefin-Copolymer ist, das unbedingt Folgendes umfassen muss: (1) ein α-Olefin, (2) einen Glycidylester einer α,β-ungesättigten Säure und (3) ein Monomer der allgemeinen Formel: 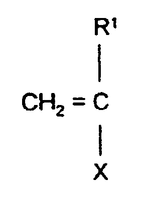 worin R¹ für ein Wasserstoffatom oder eine Niederalkylgruppe steht, X für eine aus -COOR², -CN und aromatischen Gruppen ausgewählte Gruppe steht und R² für eine Alkylgruppe mit 1 bis 10 Kohlenstoffatomen steht.

8. Elektrisch leitendes, mehrschichtiges hohles Formteil nach einem der Ansprüche 1 bis 7, worin die Schicht (a) bildende Polyphenylensulfidharzzusammensetzung unbedingt zumindest zwei, funktionelle Gruppen aufweisende Olefin-Copolymere (B) von (B1) eines Epoxygruppen-hältigen Olefin-Copolymers und (B2) eines Säureanhydridgruppen-hältigen Olefin-Copolymers aufweist, wobei das gewichtsprozentuelle Verhältnis zwischen (B1) und (B2), (B1)/(B2), im Bereich von 1:99 und 99:1 liegt, wobei (B1) und (B2) insgesamt 100 Gew.-% ergeben.

9. Elektrisch leitendes, mehrschichtiges hohles Formteil nach einem der Ansprüche 1 bis 8, worin die Schicht (a) bildende Polyphenylensulfidharzzusammensetzung zudem (C) 1 bis 200 Gewichtsteile, bezogen auf 100 Gewichtsteile des Polyphenylensulfidharzes (A), eines Elastomers, das keine Epoxygruppen, Säureanhydridgruppen, Carboxylgruppen und deren Salze sowie Carboxylatgruppen aufweist, wobei das funktionelle Gruppen aufweisende Olefin-Copolymer (B) und das Elastomer (C) insgesamt nicht mehr als 200 Gewichtsteile, bezogen auf 100 Gewichtsteile des Polyphenylensulfidharzes (A), ausmachen, enthält.

10. Elektrisch leitendes, mehrschichtiges hohles Formteil nach einem der Ansprüche 1 bis 9, worin die Schicht (a) bildende Polyphenylensulfidharzzusammensetzung zudem (D) 5 bis 200 Gewichtsteile, bezogen auf 100 Gewichtsteile des Polyphenylensulfidharzes (A), eines thermoplastischen Harzes, das im Wesentlichen aus Grundeinheiten besteht, die über zumindest einen aus Amidobindungen, Esterbindungen und Urethanbindungen ausgewählten Bindungsmodus miteinander verbunden sind, enthält.

11. Elektrisch leitendes, mehrschichtiges hohles Formteil nach Anspruch 10, worin das thermoplastische Harz (D) ein Polyamidharz ist.

12. Elektrisch leitendes, mehrschichtiges hohles Formteil nach einem der Ansprüche 1 bis 11, worin die Schicht (a) bildende Polyphenylensulfidharzzusammensetzung zudem (E) 0,05 bis 5 Gewichtsteile, bezogen auf 100 Gewichtsteile des Polyphenylensulfidharzes (A), einer Alkoxysilanverbindung mit zumindest einer aus Epoxygruppen, Aminogruppen, Isocyanatgruppen, Hydroxylgruppen, Mercaptogruppen und Ureidogruppen ausgewählten funktionellen Gruppe enthält.

13. Elektrisch leitendes, mehrschichtiges hohles Formteil nach einem der Ansprüche 1 bis 12, worin das Polyphenylensulfidharz (A), das in der Polyphenylensulfidharzzusammensetzung enthalten sein soll, die die Schicht (a) bildet, ein entionisiertes Polyphenylensulfidharz ist.

14. Elektrisch leitendes, mehrschichtiges hohles Formteil nach einem der Ansprüche 1 bis 13, worin die Schicht (c) bildende elektrisch leitende thermoplastische Harzzusammensetzung 100 Gewichtsteile einer Harzzusammensetzung umfasst, die (F) 0 bis 98 Gew.-% eines thermoplastischen Harzes, (B) 2 bis 60 Gew.-% eines Olefin-Copolymers mit zumindest einer aus Epoxygruppen, Säureanhydridgruppen, Carboxylgruppen und deren Salzen sowie Carboxylatgruppen ausgewählten funktionellen Gruppe und (C) 0 bis 58 Gew.-% eines Elastomers, das keine Epoxygruppen, Säureanhydridgruppen, Carboxylgruppen und deren Salze sowie Carboxylatgruppen aufweist, und (G) 1 bis 100 Gewichtsteile eines elektrisch leitenden Füllstoffs oder eines elektrisch leitenden Polymers umfasst.

15. Elektrisch leitendes, mehrschichtiges hohles Formteil nach Anspruch 14, worin der elektrisch leitende Füllstoff oder das elektrisch leitende Polymer (G), der/das in der elektrisch leitenden thermoplastischen Harzzusammensetzung vorliegen soll, die die Schicht (c) bildet, entweder nichtfaserig ist oder faserig mit einem Längen/Durchmesser-Verhältnis von nicht mehr als 200 ist.

16. Elektrisch leitendes, mehrschichtiges hohles Formteil nach Anspruch 14 oder 15, worin der elektrisch leitende Füllstoff (G), der in der elektrisch leitenden thermoplastischen Harzzusammensetzung vorliegen soll, die die Schicht (c) bildet, Ruß ist.

17. Elektrisch leitendes, mehrschichtiges hohles Formteil nach Anspruch 16, worin der elektrisch leitende Füllstoff (G), der in der elektrisch leitenden thermoplastischen Harzzusammensetzung vorliegen soll, die die Schicht (c) bildet, Ruß mit einer (im BET-Verfahren gemessenen) spezifischen Oberfläche von nicht weniger als 500 m²/g ist.

18. Elektrisch leitendes, mehrschichtiges hohles Formteil nach einem der Ansprüche 14 bis 17, worin das thermoplastische Harz (F), das in der elektrisch leitenden thermoplastischen Harzzusammensetzung vorliegen soll, die die Schicht (c) bildet, zumindest ein aus Polyphenylensulfiden, Polyamidharzen und thermoplastischen Polyesterharzen ausgewähltes thermoplastisches Harz ist.

19. Elektrisch leitendes, mehrschichtiges hohles Formteil nach einem der Ansprüche 14 bis 18, worin das thermoplastische Harz (F), das in der Harzzusammensetzung für die Schicht (c) vorliegen soll, ein Polyphenylensulfidharz ist und die Schicht (c) bildende elektrisch leitende thermoplastische Harzzusammensetzung eine Polyphenylensulfidharzzusammensetzung ist, die unbedingt zumindest zwei, funktionelle Gruppen aufweisende Olefin-Copolymere (B) von (B1) eines Epoxygruppen-hältigen Olefin-Copolymers und (B2) eines Säureanhydridgruppen-hältigen Olefin-Copolymers aufweist, wobei das gewichtsprozentuelle Verhältnis zwischen (B1) und (B2), (B1)/(B2), im Bereich von 1:99 und 99:1 liegt, wobei (B1) und (B2) insgesamt 100 Gew.-% ergeben.

20. Elektrisch leitendes, mehrschichtiges hohles Formteil nach einem der Ansprüche 1 bis 19, worin die elektrisch leitende thermoplastische Harzzusammensetzung, aus der die elektrisch leitende Schicht besteht, einen spezifischen Volumenwiderstand von nicht mehr als 10¹⁰ Ω cm aufweist.

21. Elektrisch leitendes, mehrschichtiges hohles Formteil nach einem der Ansprüche 1 bis 20, worin die elektrisch leitende thermoplastische Harzzusammensetzung, aus der die elektrisch leitende Schicht besteht, einen spezifischen Volumenwiderstand von mehr als 100 Ω cm, jedoch nicht mehr als 10¹⁰Ω cm aufweist.

22. Elektrisch leitendes, mehrschichtiges hohles Formteil nach einem der Ansprüche 1 bis 21, dessen Gesamtdicke im Bereich von 0,2 mm und 3 mm liegt, wobei die Dicke der elektrisch leitenden Schicht im Bereich von 1 bis 50 % der Formteilgesamtdicke liegt.

23. Verwendung eines elektrisch leitenden, mehrschichtigen hohlen Formteils nach einem der Ansprüche 1 bis 22 als Kraftstoffschlauch.

## Revendications

1. Moulage creux, multicouche, électroconducteur comprenant au moins trois couches de résine thermoplastique ou plus, dans lesquelles au moins une couche est une couche intercouche (a) d'une composition d'une résine de sulfure de polyphénylène qui comprend (A) 100 parties en poids d'une résine de sulfure de polyphénylène et (B) de 1 à 200 parties en poids d'un copolymère oléfinique contenant au moins un groupe fonctionnel sélectionné parmi des groupes époxy, des groupes anhydrides d'acide, un groupe carboxyle et ses sels, et des groupes carboxylates ;
au moins une couche est une couche externe (b) d'une résine thermoplastique à l'exception des résines de sulfure de polyphenylène ou une composition de résine thermoplastique consistant essentiellement en une résine thermoplastique à l'exception des résines de sulfure de polyphénylène ;
au moins une couche est une couche interne (c) d'une composition de résine thermoplastique, électroconductrice comprenant indispensablement une charge électroconductrice et/ou un polymère électroconducteur.

2. Moulage creux, multicouche, électroconducteur tel que revendiqué à la revendication 1 qui se compose de trois couches, une intercouche (a) d'une composition de résine de sulfure de polyphénylène, une couche externe (b) d'une résine thermoplastique à l'exception des résines de sulfure de polyphénylène ou d'une composition de résine thermoplastique consistant essentiellement en résine thermoplastique à l'exception des résines de sulfure de polyphénylène et une couche interne (c) d'une composition de résine électrocondutrice, thermoplastique comprenant indispensablement une charge électroconductrice et/ou un polymère électroconducteur.

3. Moulage creux , multicouche , électroconducteur selon les revendications 1 ou 2 , dans lequel la résine thermoplastique à l'exception des résines de sulfure de polyphénylène qui constitue la couche (b) est au moins une sélectionnée parmi des résines polyamides, des résines de polyester thermoplastique , des résines de polyuréthanne thermoplastique et des résines de polyoléfine.

4. Moulage creux , multicouche , électroconducteur selon l'une quelconque des revendications 1 à 3 dans lequel la résine thermoplastique à l'exception des résines de sulfure de polyphénylène ou la composition de résine thermoplastique consistant essentiellement en une résine thermoplastique à l'exception des résines de sulfure de polyphénylène, qui constitue les couches (b) , a un module de Young qui n'est pas plus important que 18 000 kg/cm²

5. Moulage creux , multic ouche, électroconducteur selon l'une quelconque des revendications 1 à 4, dans lequel la résine qui constitue la couche (b) est une résine de polyamide comprenant des unités amido constitutionnelles chacune ayant 8 à 15 atomes de carbone par groupe amido.

6. Moulage creux , multicouche , électroconducteur selon l'une quelconque des revendications 1 à 5, dans lequel le copolymère oléfinique (B) ayant des groupes fonctionnels devant se trouver dans la composition de résine de sulfure de polyphénylène qui constitue la couche (a) est un copolymère oléfinique ayant un groupe époxy (B1) consistant essentiellement en une α-oléfine et un glycidyl ester d'un acide α,β-insaturé.

7. Moulage creux , multicouche , électroconducteur selon la revendication 6 , dans lequel le co polymère oléfinique (B1) ayant un groupe époxy devant être dans la composition de résine de sulfure de polyphénylène qui constitue la couche (a) est un copolymère oléfinique comprenant indispensablement ( 1) une α-oléfine, (2) un glycidyl ester d'un acide α,β-insaturé et (3) un monomère à représenter par la formule générale qui suit : 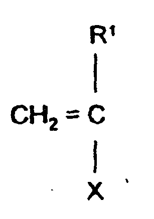 où R¹ représente un atome d'hydrogène ou un groupe alkyle inférieur ; X représente un groupe sélectionné parmi -COOR², -CN et des groupes aromatiques ; et R² représente un groupe alkyle ayant de 1 à 10 atomes de carbone.

8. Moulage creux , multicouche , électroconducteur selon l'une quelconque des revendications 1 à 7, dans lequel la composition de résine de sulfure de polyphénylène qui constitue la couche (a) comprend indispen sablement au moins deux copolymères oléfiniques ayant des groupes fonctionnels (B) de (B1) un copolymère oléfinique ayant un groupe époxy et (B2) un copolymère oléfinique ayant un groupe anhydride, et où le rapport en termes de % en poids de (B1) à (B2), (B1)/(B2), est compris entre 1/99 et 99/1 avec le total de (B1) et (B2) étant de 100% en poids.

9. Moulage creux , multicouche , électroconducteur selon l'une quelconque des revendications 1 à 8, dans lequel la composition de résine de sulfure de polyphénylène qui constitue la couche (a) contient de plus (C) de 1 à 200 parties en poids relativement à 100 parties en poids des résines de sulfure de polyphénylène (A,) d'un élastomère n'ayant aucun des groupes époxy, groupe anhydride d'acide, groupe carboxyle et ses sels ni groupes carboxylates, avec le total du copolymère oléfinique ayant un groupe fonctionnel (B) et de l'élastomère (C) qui ne dépasse pas 200 parties en poids relativement à 100 parties en poids de la résine de sulfure de polyphénylène (A).

10. Moulage creux, multicouche, électroconducteur selon l'une quelconque des revendications 1 à 9, dans lequel la composition de résine de sulfure de polyphénylène qui constitue la couche (a) contient de plus (D) de 5 à 200 parties en poids, relativement à 100 parties en poids de la résine de sulfure de polyphénylène (A), d'une résine thermoplastique consistant essentiellement en unités récurrentes liées ensembles via au moins un mode de liaison sélectionné parmi des liaisons amides, des liaisons ester et des liaisons uréthannes.

11. Moulage creux, multicouche, électroconducteur selon la revendication 10, dans lequel la résine thermoplastique (D) est une résine de polyamide.

12. Moulage creux, multicouche, électroconducteur selon l'une quelconque des revendications 1 à 11, dans lequel la composition de résine de sulfure de polyphénylène qui constitue la couche (a) contient de plus (E) de 0,05 à 5 parties en poids, relativement à 100 parties en poids de la résine (A) de sulfure de polyphénylène, d'un composé d'alcoxysilane ayant un groupe fonctionnel sélectionné parmi des groupes époxy, des groupes amino, des groupes isocyanato, des groupes hydroxyles, des groupes mercapto et des groupes uréido.

13. Moulage creux, multicouche, électroconducteur selon l'une quelconque des revendication 1 à 12, dans lequel la résine de sulfure de poylphénylène (A) devant se trouver dans la composition de résine de sulfure de polyphénylène qui constitue la couche (a) en est une désionisée.

14. Moulage creux , multicouche , électroconducteur selon l'une quelconque des revendications 1 à 13, dans lequel la composition de résine thermoplastique, électroconductrice, qui constitue la couche (c) comprend 100 parties en poids d'une composition de résine comprenant (F) de 0 à 98% en poids d'une résine thermoplastique, (B) de 2 à 60% d'un copolymère oléfinique ayant au moins un groupe fonctionnel sélectionné parmi des groupes époxy, des groupes anhydrides d'acide, un groupe carboxyle et ses sels, et des groupes carboxylates et (C) de 0 à 58% en poids d'un élastomère n'ayant aucun des groupes époxy, des groupes anhydrides d'acide, du groupe carboxyle et ses sels, ou des groupes carboxylates, et (G) de 1 à 100 parties en poids d'une charge électroconductrice ou d'un polymère électroconducteur.

15. Moulage creux , multicouche, électroconducteur selon l'une quelconque des revendications 14, dans lequel la charge électroconductrice ou le polymère (G) devant se trouver dans la composition de résine thermoplastique, électroconductrice, qui constitue la couche (c) est soit non fibreux ou fibreux ayant un rapport, longueur/diamètre, de pas plus de 200.

16. Moulage creux, multicouche, électroconducteur selon la revensication 14 ou 15 , dans lequel la charge électroconductrice (G) devant se trouver dans la composition de résine thermoplastique, électoconductrice qui constitue la couche (c) est du noir de carbone.

17. Moulage creux , multicouche , électroconducteur selon la revendication 16 , dans lequel la charge électroconductrice (G) devant se trouver dans la composition de résine thermoplastique, électroconductrice qui constitue la couche (c) est du noir de carbone ayant une aire superficielle spécifique (mesurée dans une méthode BET) de pas moins de 500 m²/g.

18. Moulage creux , multicouche , électroconducteur selon l'une quelconque des revendications 14 à 17, dans lequel la résine thermoplastique (F) devant se trouver dans la composition de résine thermoplastique, électroconductrice qui constitue la couche (c) en est au moins une choisie parmi sulfures de polyphénylène, résines de polyamide et résines de polyester thermoplastique.

19. Moulage creux , multicouche , électroconducteur selon l'une quelconque des revendications 14 à 18, dans lequel la résine thermoplastique (F) devant se trouver dans la composition de résine pour la couche (c) est une résine de sulfure de polyphénylène et la composition de résine thermoplastique, électroconductrice, qui constitue la couche (c), est une composition de résine de sulfure de polyphénylène comprenant indispensablement au moins deux copolymères oléfiniques ayant un groupe fonctionnel (B) de (B1), un copolymère oléfinique ayant un groupe époxy et (B2) un copolymère oléfinique ayant un groupe anhydride avec le rapport en termes de % en poids de (B1) à (B2), (B1)/(B2), compris entre 1/99 et 99/1 et avec le total de B1 et B2 qui est de 100% en poids.

20. Moulage creux , multicouche , électroconducteur selon l'une quelconque des revendications 1 à 19, dans lequel la composition de résine électroconductrice, thermoplastique qui constitue la couche électroconductrice a une résistivité en volume de pas plus de 10¹⁰ Ω cm.

21. Moulage creux , multicouche, électroconducteur selon l'une quelconque des revendications 1 à 20, dans lequel la composition de résine thermoplastique, électroconductrice, qui constitue la couche électroconductrice, a une résistivité en volume de plus de 100 Ω cm mais pas plus de 10¹⁰ Ω cm.

22. Moulage creux , multicouche , électroconducteur selon l'une quelconque des revendications 1 à 21 qui a une épaisseur totale comprise 0,2 mm et 3 mm et dont l'épaisseur de la couche électroconductrice est comprise entre 1% et 50% de l'épaisseur totale du moulage.

23. Utilisation d'un moulage creux, multicouche , électroconducteur selon l'une quelconque des revendications 1 à 22 comme tube de carburant.
